# EUROPEAN PATENT APPLICATION

(11) **EP 4 838 992 A1**
(43) Date of publication of application: **11.11.2026**
(21) Application number: 24918171.0
(22) Date of filing: 04.11.2024
(51) Int. Cl.: H04W 72/541

(54) **COMMUNICATION METHOD AND RELATED APPARATUS**

(30) Priority: 19.01.2024 CN 202410084391
(71) Applicant: Huawei Technologies Co., Ltd., Shenzhen, Guangdong 518129 (CN)
(72) Inventor: YANG, Bowen, Shenzhen, Guangdong 518129 (CN); WANG, Ruihua, Shenzhen, Guangdong 518129 (CN); WANG, Fan, Shenzhen, Guangdong 518129 (CN)
(74) Representative: MERH-IP Matias Erny Reichl Hoffmann Patentanwälte PartG mbB
(86) International application number: PCT/CN2024/129559
(87) International publication number: WO 2025/152562

(57) **Abstract**

A communication method and a related apparatus are provided. Communication interference between different communication devices can be reduced by using sparseness of intersections between different geometries, and a resource collision with a small girth (girth) can be suppressed by using curvature of a non-linear space corresponding to a non-linear equation, to reduce joint collisions between different resources, so as to improve communication performance. In the method, a first communication apparatus determines K₁ resources, where the K₁ resources are included in M resources, K₁ is a positive integer, M is an integer greater than or equal to K₁, the M resources respectively correspond to M coordinate points in an N-dimensional coordinate space, the M coordinate points are determined by using a non-linear equation, resource indexes of the K₁ resources in the M resources are determined based on a solution in a solution set of an i₁-dimensional subspace in the N-dimensional coordinate space, N is an integer greater than 1, and i₁ is less than or equal to N. The first communication apparatus sends first information, where the first information indicates the K₁ resources.

## Description

This application claims priority to Chinese Patent Application No. 202410084391.3, filed with the China National Intellectual Property Administration on January 19, 2024 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

Wireless communication may be transmission communication performed between two or more communication nodes without propagation via a conductor or a cable. The communication nodes generally include a network device and/or a terminal device.

In a communication system, under a massive connection scenario, different terminal devices may share a segment of resources. For example, when a quantity of terminal devices is greater than a quantity of resources, communication resources of different terminal devices may partially or completely overlap.

However, in the foregoing case, communication interference between different terminal devices is inevitable, affecting communication performance.

### SUMMARY

This application provides a communication method and a related apparatus, to reduce joint collisions between different resources, so as to improve communication performance.

A first aspect of this application provides a communication method. The method is applied to a first communication apparatus. The first communication apparatus may be a communication device (for example, a network device or a terminal device), or the first communication apparatus may be some components (for example, a processor, a chip, or a chip system) in the communication device, or the first communication apparatus may be a logical module or software that can implement all or some functions of the communication device. In the method, the first communication apparatus determines K₁ resources, where the K₁ resources are included in M resources, K₁ is a positive integer, M is an integer greater than or equal to K₁, the M resources respectively correspond to M coordinate points in an N-dimensional coordinate space, the M coordinate points are determined by using a non-linear equation, resource indexes of the K₁ resources in the M resources are determined based on a solution in a solution set of an i₁-dimensional subspace in the N-dimensional coordinate space, N is an integer greater than 1, and i₁ is less than or equal to N. The first communication apparatus sends first information, where the first information indicates the K₁ resources.

According to the foregoing technical solution, the K₁ resources determined by the first communication apparatus are included in the M resources, the M resources respectively correspond to the M coordinate points in the N-dimensional coordinate space, and the resource indexes of the K₁ resources in the M resources are determined based on a solution in the solution set of the i₁-dimensional subspace in the N-dimensional coordinate space. Different solutions included in the solution set of the i₁-dimensional subspace may correspond to different geometries in space, and intersections between the different geometries may indicate a resource collision (or a resource conflict) between resources corresponding to different indexes determined by different solutions in the solution set. Therefore, according to the implementation of determining the resource indexes of the K₁ resources in the M resources based on a solution in the solution set, communication interference between different communication devices can be reduced by using sparseness of intersections between different geometries, to improve communication performance.

In addition, the M coordinate points corresponding to the M resources are determined by using a non-linear equation, so that the M coordinate points are in a non-linear space (for example, a curved surface space or a curved high-dimensional space). Therefore, by using curvature of the non-linear space corresponding to the non-linear equation, a resource collision with a small girth (for example, the girth is equal to 3) can be suppressed, to reduce joint collisions between different resources, and further improve anti-interference capabilities of different communication devices.

In addition, in comparison with an implementation process of determining a resource by using a fixed codebook, when there are a plurality of solutions in the solution set of the i₁ -dimensional subspace, the implementation of determining the resource indexes of the K₁ resources in the M resources based on a solution in the solution set can improve flexibility of determining the resource.

In this application, the girth may be understood as a quantity of geometries forming an enclosed space in space. For example, in a case where the geometry is a one-dimensional line, the girth may be understood as a quantity of lines forming an enclosed space in space. For another example, in a case where the geometry is a two-dimensional face, the girth may be understood as a quantity of faces forming an enclosed space in space.

Coordinate points included in each geometry may correspond to resources (for example, when the M resources correspond to the M coordinate points as described above, the M coordinate points may be respectively used for identifying the M resources). In a plurality of geometries forming an enclosed space in space, there is an intersection between adjacent geometries, and there is no intersection between non-adjacent geometries. In other words, a resource collision exists between resources corresponding to the adjacent geometries, and no resource collision exists between resources corresponding to the non-adjacent geometries. According to the foregoing technical solution, when resource indexes of different communication devices are determined based on coordinate points included in different geometries, a larger minimum value of the girth indicates a larger quantity of geometries forming an enclosed space, that is, fewer collisions between different resources; on the contrary, a smaller minimum value of the girth indicates a smaller quantity of geometries forming an enclosed space, that is, more collisions between different resources.

Optionally, the girth may be replaced with another term, for example, ring length, collision girth, or joint collision girth.

Optionally, in the foregoing technical solution, the plurality of solutions included in the solution set of the i₁-dimensional subspace in the N-dimensional coordinate space correspond to a plurality of geometries, and a quantity of geometries forming an enclosed space in space in the plurality of geometries is greater than or equal to 4. In other words, a girth corresponding to different geometries corresponding to different resources determined by using the foregoing solution set is greater than or equal to 4. This can reduce joint collisions between different resources in comparison with an implementation in which a girth is equal to 3 because resource indexes are determined in a linear space (or straight space).

In the foregoing technical solution, the first communication apparatus may send the first information in a plurality of implementations, in other words, a receiver of the first information may have a plurality of implementations. The following provides descriptions with reference to some examples.

Example 1: The first communication apparatus is a network device, and the receiver may be a terminal device. In other words, the network device may send the first information to the terminal device, so that the terminal device can subsequently perform communication by using the K₁ resources indicated by the first information.

Example 2: The first communication apparatus is a network device, and the receiver may be another network device. In other words, the network device may send the first information to another network device, so that the another network device can subsequently perform communication by using the K₁ resources indicated by the first information. For example, the network device and the another network device are respectively a baseband unit and a radio frequency unit, a building baseband unit (building baseband unit, BBU) and a radio remote unit (remote radio unit, RRU), a BBU and an active antenna unit (active antenna unit, AAU), a distributed unit (distributed unit, DU) and a radio unit (radio unit, RU), a radio equipment controller (radio equipment controller, REC) and a radio equipment (radio equipment, RE), and the like.

Example 3: The first communication apparatus is a terminal device, and the receiver may be another terminal device. In other words, one terminal device may send the first information to another terminal device, so that the another terminal device can subsequently perform communication by using the K₁ resources indicated by the first information, and the solution is applicable to a sidelink (sidelink, SL) communication scenario.

Example 4: The first communication apparatus is a module of a terminal device, and the receiver may be another module of the terminal device. In other words, the module in the terminal device may send the first information to the another module in the terminal device, so that the another module can subsequently perform communication by using the K₁ resources indicated by the first information. For example, the module and the another module are respectively a baseband unit and a radio frequency unit, a baseband chip and a radio frequency chip, and the like.

The resource (for example, any one of the K₁ resources, any one of the M resources, or any one of the K₂ resources mentioned below) in this application may be one or more time units, one or more frequency domain units, or one or more time-frequency units.

For example, the time unit may be one or more symbols, one or more mini-slots, one or more slots, one or more subframes, or one or more frames.

For another example, the frequency domain unit may be one or more subcarriers, one or more subbands, one or more bandwidth parts (bandwidth parts, BWPs), or one or more carriers.

For another example, the time-frequency unit may be one or more resource elements (resource elements, REs), one or more resource blocks (resource blocks, RBs), or one or more physical resource blocks (physical resource blocks, PRBs).

It can be learned from the foregoing implementation processes that the resource indexes of the K₁ resources in the M resources may be one solution in the solution set of the i₁-dimensional subspace in the N-dimensional coordinate space. When values such as N and i₁ are determined, the solution set of the i₁-dimensional subspace in the N-dimensional coordinate space is determined. The solution set may also be referred to as a codebook set, and a solution in the solution set may be referred to as a codebook in the codebook set. In other words, in the first aspect, the first communication apparatus may determine the resource indexes of the K₁ resources in the M resources based on one codebook in the codebook set. For a specific implementation process, refer to implementation processes shown in the following tables.

In a possible implementation of the first aspect, the non-linear equation is a homogeneous equation. Generally, a solution set of a homogeneous equation is coordinate points in a projective space; and a solution set of a non-homogeneous equation may not uniquely correspond to coordinate points in the projective space, and there is a probability that chaos occurs during indexing. Therefore, when the non-linear equation is a homogeneous equation, the non-linear equation is more stable and reliable in use.

In a possible implementation of the first aspect, a degree of at least one polynomial included in the non-linear equation is greater than or equal to 2. In this manner, a space represented by the equation can be non-linear. Optionally, a degree of any polynomial included in the non-linear equation is greater than or equal to 2.

In a possible implementation of the first aspect, a quantity of unknowns included in the non-linear equation is greater than or equal to 4.

Optionally, an example in which the quantity of unknowns is L and the girth is G is used, and L and G satisfy: $G = \left⌈L/2\right⌉ + 2 ,$ where
$\left⌈L/2\right⌉$ represents that a value of L/2 is rounded up.

According to the foregoing technical solution, in a process of determining a resource, the quantity of unknowns included in the non-linear equation may be set, so that the girth is controllable, and flexibility of implementing the solution is improved.

In a possible implementation of the first aspect, the method further includes: The first communication apparatus performs communication based on the K₁ resources.

According to the foregoing technical solution, the first communication apparatus may send a signal and/or receive a signal by using the K₁ resources, so that the first communication apparatus can serve as a resource user to implement signal transmission.

In a possible implementation of the first aspect, the method further includes: The first communication apparatus receives second information, where the second information indicates the K₁ resources. That the first communication apparatus determines the K₁ resources includes: The first communication apparatus determines the K₁ resources based on the second information.

According to the foregoing technical solution, the first communication apparatus may receive the second information, and the first communication apparatus determines, based on the second information, the K₁ resources used for communication. In other words, the first communication apparatus may serve as a party for which a resource is scheduled, and the first communication apparatus may receive an indication from a resource scheduler, to determine the K₁ resources used for communication.

Optionally, the second information may be from another communication apparatus. For example, the another communication apparatus may be a network device or a terminal device.

In a possible implementation of the first aspect, the N-dimensional coordinate space is an N-dimensional affine space or an N-dimensional projective space.

According to the foregoing technical solution, the N-dimensional coordinate space used for determining the K₁ resources may be implemented in any one of the foregoing manners, to improve flexibility of implementing the solution.

Optionally, the N-dimensional coordinate space is an N-dimensional projective space, the N-dimensional projective space is represented as PG(N, p), and p is an order of the N-dimensional projective space. p may be a prime number or an integer power of a prime number. It should be understood that "PG" represents projective geometry over a Galois field (Projective Geometry over a Galois Field), projective geometry (Projective Geometry), or a projective space.

In a possible implementation of the first aspect, values of N and p are determined based on a value of M.

According to the foregoing technical solution, in the N-dimensional projective space, a quantity of coordinate points in the N-dimensional projective space in space may be determined depending on the values of N and p. Therefore, the values of N and p may be determined based on the total quantity M of resources. In this manner, the K₁ resources used for communication can be determined in the N-dimensional projective space that adapts to the total quantity M of resources.

Optionally, a total quantity of coordinate points in the N-dimensional projective space satisfies: $y = \frac{{p}^{N + 1} - 1}{p - 1} ;$ and $M \leq y ,$ where
y is the total quantity of coordinate points in the N-dimensional projective space.

In a possible implementation of the first aspect, the values of N and p are determined based on third information, and the third information indicates at least one of a lower limit value of a resource quantity of communication resources, an upper limit value of the resource quantity of communication resources, and a quantity of communication apparatuses that perform communication on the M resources.

Optionally, the lower limit value of the resource quantity of communication resources may be understood as a lower limit value of a resource quantity requirement for the communication resources, in other words, the lower limit value indicates a minimum value of the resource quantity of communication resources. Similarly, the upper limit value of the resource quantity of communication resources may be understood as an upper limit value of a resource quantity requirement for the communication resources, in other words, the lower limit value indicates a maximum value of the resource quantity of communication resources. A determining party (for example, the first communication apparatus) that determines the values of N and p may determine the lower limit value and/or the upper limit value of the resource quantity of communication resources based on a service requirement of the determining party (or indication information of a communication peer end).

Optionally, the determining party (for example, the first communication apparatus) that determines the values of N and p may determine, based on the service requirement of the determining party (or quantity information of the communication peer end), the quantity of communication apparatuses that perform communication on the M resources.

According to the foregoing technical solution, in the N-dimensional projective space, resource quantities determined by using different solutions in a solution set of a subspace in the N-dimensional projective space may be determined depending on the values of N and p. In other words, at least one of the foregoing items may be used for determining the values of N and p. In this manner, the resource quantity of communication resources may be adjusted and controlled based on the values of N and p.

Optionally, the solution set of the i₁-dimensional subspace in the N-dimensional coordinate space is a solution set of a system of equations including N-i₁ equations.

Optionally, any one of the N-i₁ equations satisfies: $a_ 0 * X_ 0 + a_ 1 * X_ 1 + … + a_N * X_N = 0 ,$ where
X_0, X_1, ..., and X_N represent unknowns, and a_0, ..., and a_N are all from a Galois field GF(p). It should be understood that "GF" represents the Galois field (Galois Field).

In a possible implementation of the first aspect, the method further includes: The first communication apparatus determines K₂ resources, where the K₂ resources are included in the M resources, K₂ is a positive integer, M is an integer greater than or equal to K₂, resource indexes of the K₂ resources in the M resources are determined based on a solution in a solution set of an i₂-dimensional subspace in the N-dimensional coordinate space, N is an integer greater than 1, and i₂ is less than or equal to N. The first communication apparatus sends fourth information, where the fourth information indicates the K₂ resources.

According to the foregoing technical solution, in addition to the K₁ resources, the first communication apparatus may further determine the K₂ resources, and send the fourth information indicating the K₂ resources, so that a receiver of the fourth information can perform communication based on the K₂ resources.

It should be understood that, for the receiver of the fourth information, refer to the foregoing descriptions of the receiver of the first information.

Optionally, K₁=K₂ and i₁=i₂, orK₁ ≠ K₂ and i₁ ≠ i₂.

For example, the first communication apparatus may communicate with a second communication apparatus based on the K₁ resources, and the first communication apparatus may communicate with a third communication apparatus based on the K₂ resources. The solution set of the i₁-dimensional subspace in the N-dimensional coordinate space is the solution set of the system of equations including the N-i₁ equations. Correspondingly, the solution set of the i₂-dimensional subspace in the N-dimensional coordinate space is a solution set of a system of equations including N-i₂ equations.

Because resource quantities corresponding to different solutions with a same equation quantity may be the same, when i₁=i₂, a quantity (that is, K₁) of resources for communication between the first communication apparatus and the second communication apparatus is the same as a quantity (that is, K₂) of resources for communication between the first communication apparatus and the third communication apparatus. In this manner, based on the N-dimensional coordinate space by using sparseness of intersections between different geometries, communication interference between different communication devices can be reduced, and a process of allocating a same quantity of resources to different communication apparatuses can be implemented, to adapt to a scenario in which a plurality of communication apparatuses have a same resource quantity requirement.

Because resource quantities corresponding to different solutions with different equation quantities may be different, when i₁ ≠ i₂, a quantity (that is, K₁) of resources for communication between the first communication apparatus and the second communication apparatus may be different from a quantity (that is, K₂) of resources for communication between the first communication apparatus and the third communication apparatus. In this manner, based on the N-dimensional coordinate space by using sparseness of intersections between different geometries, communication interference between different communication devices can be reduced, and a process of allocating different quantities of resources to different communication apparatuses can be implemented, to adapt to a scenario in which a plurality of communication apparatuses have different resource quantity requirements. For example, solution sets with a smaller quantity of equations (higher dimensions) are more than solution sets with a larger quantity of equations (lower dimensions), and correspond to more resources, to support coexistence of communication apparatuses with different rates (where a larger resource quantity indicates a higher rate, and on the contrary, a smaller resource quantity indicates a lower rate).

It may be understood that, when i₁ ≠ i₂, an intersection between a space with a higher dimension and a space with a lower dimension depends on the space with a lower dimension. For example, two straight lines intersect at at most one point, and a plane and a straight line (not on the plane) intersect at at most one point. This also ensures a minimum collision when communication apparatuses with different rates coexist.

A second aspect of this application provides a communication apparatus. The apparatus is a first communication apparatus. The first communication apparatus includes a transceiver unit and a processing unit. The processing unit is configured to determine K₁ resources, where the K₁ resources are included in M resources, K₁ is a positive integer, M is an integer greater than or equal to K₁, the M resources respectively correspond to M coordinate points in an N-dimensional coordinate space, the M coordinate points are determined by using a non-linear equation, resource indexes of the K₁ resources in the M resources are determined based on a solution in a solution set of an i₁-dimensional subspace in the N-dimensional coordinate space, N is an integer greater than 1, and i₁ is less than or equal to N. The transceiver unit is configured to send first information, where the first information indicates the K₁ resources.

A third aspect of this application provides a communication apparatus. The communication apparatus includes at least one processor. The at least one processor is coupled to a memory. The memory is configured to store a computer program or instructions. The at least one processor is configured to execute the computer program or the instructions, to cause the communication apparatus to implement the method according to any one of the first aspect and the possible implementations of the first aspect.

A fourth aspect of this application provides a communication apparatus. The communication apparatus includes at least one logic circuit and an input/output interface. The logic circuit is configured to perform the method according to any one of the first aspect and the possible implementations of the first aspect.

A fifth aspect of this application provides a communication system. The communication system includes the foregoing first communication apparatus.

Optionally, the communication system further includes the foregoing another communication apparatus, the foregoing second communication apparatus, the foregoing third communication apparatus, and the like.

A sixth aspect of this application provides a computer-readable storage medium. The storage medium is configured to store one or more computer programs or instructions. When the computer programs or the instructions are executed by a computer, the computer performs the method according to any one of the first aspect and the possible implementations of the first aspect.

A seventh aspect of this application provides a computer program product (or referred to as a computer program). When a computer program in the computer program product is executed by a computer, the computer is caused to perform the method according to any one of the first aspect and the possible implementations of the first aspect.

An eighth aspect of this application provides a chip system. The chip system includes at least one processor, configured to support the chip system in implementing the method according to any one of the first aspect and the possible implementations of the first aspect.

In a possible design, the chip system may further include a memory. The memory is configured to store program instructions and data that are necessary for the chip system. The chip system may include a chip, or may include a chip and another discrete device. Optionally, the chip system further includes an interface circuit. The interface circuit provides computer program instructions and/or data for the at least one processor.

For technical effects brought by any one of the designs of the second aspect to the eighth aspect, refer to technical effects brought by the first aspect and different designs of the first aspect. Details are not described herein again.

### BRIEF DESCRIPTION OF DRAWINGS

FIG. 1 is a diagram of a communication system according to this application;
FIG. 2a to FIG. 2c are some diagrams of a communication system according to this application;
FIG. 3 is a diagram of resource allocation according to this application;
FIG. 4 is a diagram of interaction of a communication method according to this application;
FIG. 5a to FIG. 5b are diagrams of some implementation examples of a communication method according to this application; and
FIG. 6 to FIG. 7 are diagrams of communication apparatuses according to this application.

### DESCRIPTION OF EMBODIMENTS

First, some terms in embodiments of this application are described for ease of understanding by a person skilled in the art.
(1) Configuration and pre-configuration: In this application, both configuration and pre-configuration are used. The configuration means that a network device, for example, a base station or a server, sends configuration information of some parameters or parameter values to a terminal by using a message or signaling, so that the terminal determines a communication parameter or a transmission resource based on the values or the information. Similar to the configuration, the pre-configuration may be a manner in which a network device, for example, a base station or a server, sends parameter information or a value to a terminal by using a communication link or a carrier, or may be a manner in which a corresponding parameter or parameter value is defined in a standard or a related parameter or value is set in a terminal device in advance. This is not limited in this application. Further, these values and parameters may be changed or updated.
(2) In this application, "indicating" may include "directly indicating" and "indirectly indicating". When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information may be indicated in a plurality of manners. For example, the to-be-indicated information may be directly indicated, for example, indicated by using the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitter device by sending configuration information to a receiver device. The configuration information may include, for example, but not limited to, one or a combination of at least two of radio resource control (radio resource control, RRC) signaling, medium access control (medium access control, MAC) layer signaling, and physical layer signaling. The MAC layer signaling includes, for example, a medium access control control element (medium access control control element, MAC CE), and the physical layer signaling includes, for example, downlink control information (downlink control information, DCI).

(3) The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(4) "Sending" and "receiving" in embodiments of this application represent signal transmission directions. In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station. "Sending" may alternatively be understood as "outputting" of a chip interface, and "receiving" may alternatively be understood as "inputting" of the chip interface.

(5) Affine (Affine) space: The affine space is a coordinate space in which coordinates are from a Galois field (Galois field).

The affine space may be represented as AG(N, p), where AG(N, p)includes p^{N} points, a coordinate of each point is (a₁, a₂, ..., a_{N}), aᵢ ∈ GF(p), and p is a prime number or an integer power of a prime number. This space is analogous to a Euclidean space in the Galois field.

(6) Projective (Projective) space: The projective space is a coordinate space in which coordinates are from a Galois field.

The projective space may be represented as PG(N, p), where PG(N, p)includes p^{N} + p^{N-1} + ··· + p + 1 points, a coordinate of each point is [a₀: a₁: ... : a_{N}], aᵢ ∈ GF(p), p in GF(p) means a p-element finite field or a p-element Galois field, and p is a prime number or an integer power of a prime number.

In addition, for [a₀: a₁: ... : a_{N}], [0: 0: ... : 0] is not a coordinate point.

In addition, for any case in which b ≠ 0, [a₀: a₁: ... : a_{N}]and [ba₀: ba₁: ...: ba_{N}] correspond to same points. For example, when p = 3, [1: 2: 2] and [2: 1: 1] should be considered to be same coordinates because [2: 1: 1] = [2: 4: 4] = [1: 2: 2].

It should be noted that the projective space includes an affine space, in other words, the "affine space" is a subset of the "projective space". The points in PG(N, p) may include two types: a₀ = 0 and a₀ ≠ 0. The latter type is actually AG(N, p). When a₀ ≠ 0, ba₀ = 1 because b ∈ GF(p). In this case, coordinates in a unified form [1: a₁: ... : a_{N}] are obtained, and a 1^{st} coordinate (that is, a 1^{st} item in the coordinate) is ignored, to obtain affine spatial coordinates (a₁, a₂, ..., a_{N}).

It should be understood that "AG" represents affine geometry over a Galois field (Affine Geometry over a Galois Field), affine geometry (Affine Geometry), or an affine space.

(7) i-dimensional subspace: In PG(N, p), one i-dimensional subspace is a solution set of a system of equations including N - i (homogeneous) linear equations. A one-dimensional subspace is referred to as a straight line, and a two-dimensional subspace is referred to as a plane. More equations indicate a lower dimension. A total quantity of points in the i-dimensional subspace is pⁱ + pⁱ⁻¹ + ··· + p + 1.

In addition, a quantity of equations corresponding to the i-dimensional subspace is N-i. For example, derivation processes are as follows.

Zero equation: The entire PG(N, p) is an N-dimensional space.

One linear equation: (N-1)-dimensional subspace, where not all points satisfy this equation due to one constraint.

Two (independent) linear equations: (N-2)-dimensional subspace, where a dimension further decreases because there are two constraints. This subspace is an intersection between (N-1)-dimensional subspaces established by using the two equations, and therefore the dimension decreases by 1. For example, an intersection between two planes (two-dimensional) is a straight line (one-dimensional), and an intersection between two straight lines (one-dimensional) is a point (zero-dimensional).

By analogy, N-2 (independent) linear equations: two-dimensional subspace (plane); N-1 (independent) linear equations: one-dimensional subspace (straight line); N (independent) linear equations: zero-dimensional subspace (point). Optionally, for linear equations more than N, there may be no solution. Independence herein means that no equation is a linear superposition of another equation.

In addition, the quantity of points in the i-dimensional subspace, that is, a quantity of solutions of a system of equations including N-i (independent) equations, is pⁱ + pⁱ⁻¹ + ··· + p + 1. For example, a derivation process is as follows. The i-dimensional subspace is a projective space, that is, the i-dimensional subspace in PG(N, p) is PG(i, p), and therefore the quantity of points is pⁱ + pⁱ⁻¹ + ··· + p + 1.

Particularly, it is noted that a quantity of points on a plane is p² + p + 1; a quantity of points on a straight line is p + 1; and a quantity of i-dimensional subspaces in PG(N, p) satisfies: $\frac{{\prod }_{k = N - i + 1}^{N + 1} \left({p}^{k}-1\right)}{{\prod }_{i = 1}^{i + 1} \left({p}^{l}-1\right)} ,$ where
${\prod }_{k = N - i + 1}^{N + 1} \left({p}^{k}-1\right)$ represents continuous multiplication (or cumulative multiplication) on a total of i+1 elements: (p^{N-i+1} - 1), (p^{N-i+2} - 1), ..., and (p^{N+1} - 1), ${\prod }_{l = 1}^{i + 1} \left({p}^{l}-1\right)$ represents continuous multiplication (or cumulative multiplication) on a total of i+1 elements: (p¹ - 1), (p² - 1), ..., and (pⁱ⁺¹ - 1), p and N are inputs of the projective space, N is a dimension, p is a prime number or an integer power of a prime number, and i is a dimension of a concerned subspace, for example, for a line, i=1.

Particularly, when i=1, the quantity of i-dimensional subspaces may be understood as a quantity of straight lines, and satisfies: $\frac{{\prod }_{k = N - i + 1}^{N + 1} \left({p}^{k}-1\right)}{{\prod }_{i = 1}^{i + 1} \left({p}^{l}-1\right)} = \frac{\left({p}^{N}-1\right) \left({p}^{N + 1}-1\right)}{\left(p-1\right) \left({p}^{2}-1\right)} .$

For example, when i=1, a derivation process is as follows. In the p^{N} + p^{N-1} + ··· + p + 1 points of PG(N, p), one line is determined by every two points, to be specific, a total of C(p^{N} + p^{N-1} + ··· + p + 1, 2) = (p^{N} + p^{N-1} + ··· + p + 1) (p^{N} + p^{N-1} + ··· + p)/2 lines are determined, where C() is a function in permutations and combinations. However, there are p+1 points on each line. In this case, C(p + 1,2) = (p + 1)p/2 pairs of points are used for determining this line. Therefore, a total quantity of lines should be a quotient of the two numbers: $\begin{matrix}\frac{\left({p}^{N}+{p}^{N - 1}+⋯+p+1\right) \left({p}^{N}+{p}^{N - 1}+⋯+p\right)}{\left(p+1\right) p} \\ = \frac{\left({p}^{N}+{p}^{N - 1}+⋯+p+1\right) \left({p}^{N - 1}+{p}^{N - 2}+⋯+1\right)}{p + 1} \\ = \frac{\left({p}^{N + 1}-1\right) \left({p}^{N}-1\right)}{\left(p-1\right) \left(p-1\right) \left(p+1\right)} \\ = \frac{\left({p}^{N}-1\right) \left({p}^{N + 1}-1\right)}{\left(p-1\right) \left({p}^{2}-1\right)} .\end{matrix}$

(8) Overloading factor (overloading factor, OF): a ratio of a user quantity to a resource quantity.

(9) Surjection: In a case where a coordinate corresponds to resources, if all coordinates have corresponding resources, surjection holds.

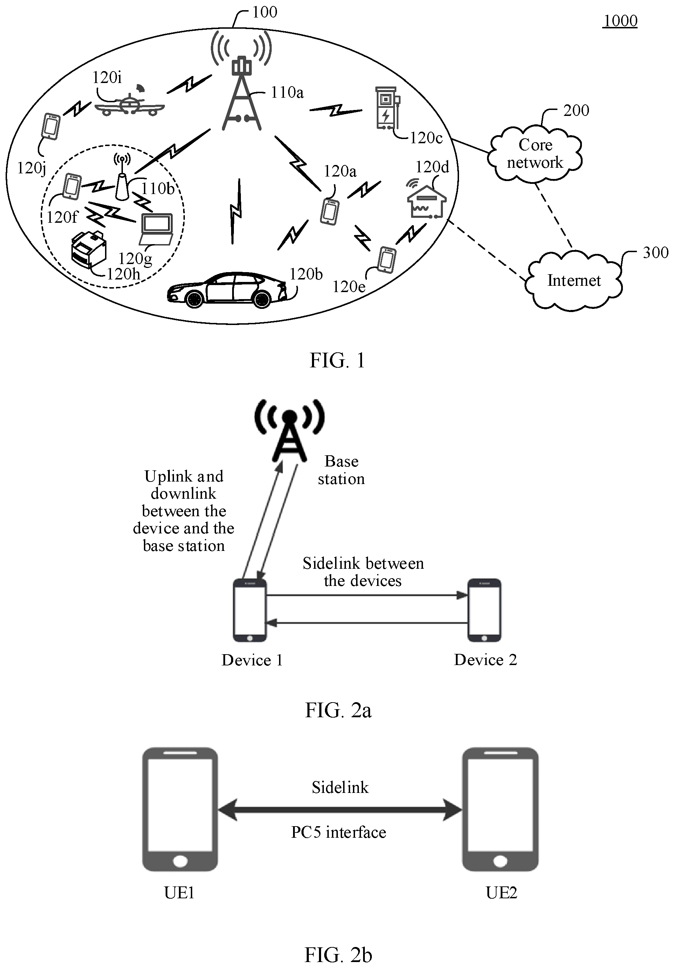

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. Mutual connections between terminals and between RAN nodes may be implemented in a wired or wireless manner.

The RAN 100 may be an evolved universal terrestrial radio access (evolved universal terrestrial radio access, E-UTRA) system, a new radio (new radio, NR) system, and a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help a terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) layer of the base station, and may further complete a function of a service data adaptation protocol (service data adaptation protocol, SDAP). The DU completes functions of a radio link control (radio link control, RLC) layer and a MAC layer of the base station, and may further complete some or all functions of a physical layer. For detailed descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes: a CU control plane (CU control plane, CU-CP) and a CU user plane (CU user plane, CU-UP).

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which a base station is used as the RAN node.

A terminal is a device having a wireless transceiver function, and may send a signal to the base station, or receive a signal from the base station. The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed according to a radio air interface protocol. It is clear that the communication between 110a and 120i may alternatively be performed according to an interface protocol between base stations. In this case, for 110a, 120i is also a base station. Therefore, both the base station and the terminal may be collectively referred to as communication apparatuses, 110a and 110b in FIG. 1 may be referred to as a communication apparatus having a function of a base station, and 120a to 120j in FIG. 1 may be referred to as a communication apparatus having a function of a terminal.

Communication may be performed between a base station and a terminal, between base stations, or between terminals by using a licensed spectrum, an unlicensed spectrum, or both the licensed spectrum and the unlicensed spectrum; may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be alternatively performed by a module (for example, a chip or a modem) in the terminal, or may be performed by an apparatus including the function of the terminal.

FIG. 2a is a diagram of a communication system according to an embodiment of this application. In FIG. 2a, an example in which a network device is a base station is used for description, and both a device 1 and a device 2 are terminal devices. As shown in FIG. 2a, a communication link between the device 1 and the device 2 may be referred to as a sidelink (sidelink, SL), and a communication link between the device 1 (or the device 2) and the base station may be referred to as an uplink-downlink, including an uplink (uplink) and a downlink (downlink). It can be learned that the sidelink is a communication mechanism in which different devices (for example, terminal devices) directly communicate with each other without the network device (the base station).

Optionally, on the sidelink (sidelink, SL), generally, a transmitting device and a receiving device may be terminal devices or network devices of a same type, or may be a road side station (road side unit, RSU) and a terminal device. From a perspective of a physical entity, the RSU is a road side station or a road side unit. From a perspective of a function, the RSU may be a terminal device, or may be a network device. This is not limited in this application. In other words, the transmitting device is a terminal device, and the receiving device is also a terminal device; or the transmitting device is a road side station, and the receiving device is a terminal device; or the transmitting device is a terminal device, and the receiving device is a road side station. In addition, the sidelink may alternatively be a link between base station devices of a same type or different types. In this case, a function of the sidelink is similar to that of a trunk link, but an air interface technology used by the sidelink may be the same as or different from that used by the trunk link.

As shown in FIG. 2b, when a terminal device (denoted as UE1) directly communicates with another terminal device (denoted as UE2) without a network device, a communication link between the two terminal devices may be referred to as a sidelink (sidelink). In other words, the two terminal devices communicate with each other through a proximity-based services communication 5 (proximity-based services communication 5, PC5) interface.

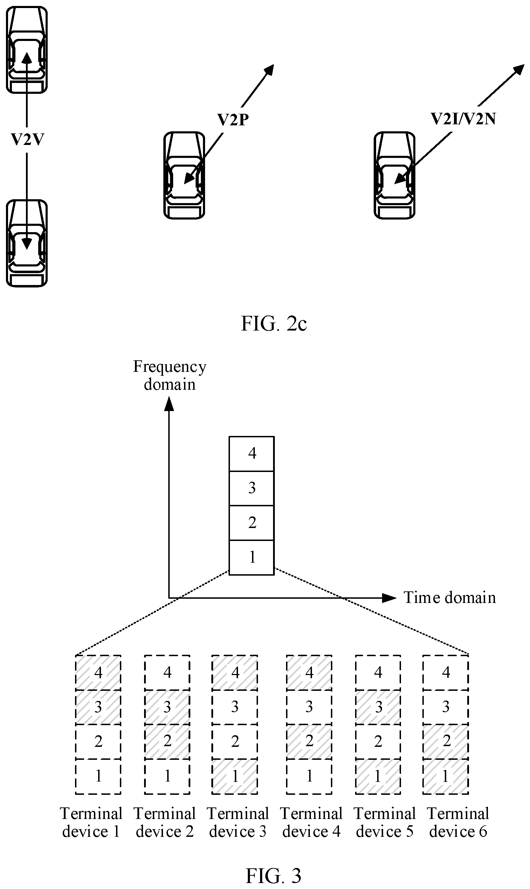

As shown in FIG. 2c, as a typical application of the sidelink, a V2X communication technology uses and enhances current cellular network functions and elements, to implement low-latency and high-reliability communication between various nodes in a vehicle network, including vehicle-to-vehicle (vehicle-to-vehicle, V2V for short) communication, vehicle-to-pedestrian (vehicle-to-pedestrian, V2P for short) communication, vehicle-to-infrastructure (Vehicle-to-Infrastructure, V2I for short) communication, or vehicle-to-network (vehicle-to-network, V2N for short) communication. As a cellular system evolves from 4G long term evolution (long term evolution, LTE for short) to 5G, C-V2X evolves from LTE-V2X to NR-V2X (new radio V2X, NR-V2X for short).

In addition, V2X communication has great potential in reducing vehicle collision accidents, so that corresponding casualties can further be reduced. Advantages of V2X are not limited to improving safety. A vehicle that can perform V2X communication helps better perform traffic management, to further promote green traffic and lower energy consumption. An intelligent transportation system (intelligent transportation system, ITS for short) is an application that integrates V2X. According to the V2X technology, a vehicle user (vehicle UE, V-UE for short) can send, to a V-UE nearby, some information about the vehicle user, for example, information such as a position, a speed, and an intention (turning, merging, or reversing) and information triggered by some periodic and aperiodic events, and the V-UE can also receive information from a user nearby in real time. 5G NR V2X can support lower transmission latency, more reliable communication transmission, higher throughput, and better user experience, to satisfy requirements of more extensive application scenarios. Further, a vehicle-to-vehicle communication technology supported by V2X may be further applied to device-to-device (device-to-device, D2D for short) communication in any system.

In a communication system (for example, the communication system shown in FIG. 1, FIG. 2a, FIG. 2b, or FIG. 2c), in a massive connection scenario, different terminal devices may share a segment of resources. For example, when a quantity of terminal devices is greater than a quantity of resources, communication resources of different terminal devices may partially or completely overlap. It can be learned that, in the foregoing case, communication interference between different terminal devices is inevitable, affecting communication performance.

In an implementation example, interference can be reduced according to a sparse code multiple access (sparse code multiple access, SCMA) technology. The following describes the SCMA technology with reference to some implementation examples.

FIG. 3 is used as an example. When a fixed SCMA codebook is used for resource allocation, and a quantity of resources is 4 (or a multiple of 4), an SCMA resource allocation scheme is shown in FIG. 3, and includes the following:
Resources allocated to a terminal device 1 are a resource 3 and a resource 4.
Resources allocated to a terminal device 2 are a resource 2 and the resource 3.
Resources allocated to a terminal device 3 are a resource 1 and the resource 4.
Resources allocated to a terminal device 4 are the resource 2 and the resource 4.
Resources allocated to a terminal device 5 are the resource 1 and the resource 3.
Resources allocated to a terminal device 6 are the resource 1 and the resource 2.

In FIG. 3, when there are four resources available for communication, a network device may be accessed by the six terminal devices (that is, six users), a quantity of available resources for a single user is 2, and an overloading factor OF is equal to 1.5 (that is, 6/4=1.5).

In addition, in FIG. 3, interference is caused due to a resource collision on the resource 1 between three terminal devices, namely, the terminal device 1, the terminal device 3, and the terminal device 4; interference is caused due to a resource collision on the resource 2 between three terminal devices, namely, the terminal device 1, the terminal device 2, and the terminal device 5; interference is caused due to a resource collision on the resource 3 between three terminal devices, namely, the terminal device 2, the terminal device 4, and the terminal device 6; and interference is caused due to a resource collision on the resource 4 between three terminal devices, namely, the terminal device 3, the terminal device 5, and the terminal device 6. In other words, according to the SCMA technology, a probability (or referred to as a collision loss rate) of a collision between resources used by different terminal devices is less than or equal to 1/2.

However, in a communication process implemented according to the SCMA technology, because a fixed SCMA codebook is used for determining resources, it is difficult to flexibly design a resource allocation granularity, a resource quantity, and a user quantity.

To resolve the foregoing problem, this application provides a communication method and a related apparatus. The following provides detailed descriptions with reference to the accompanying drawings.

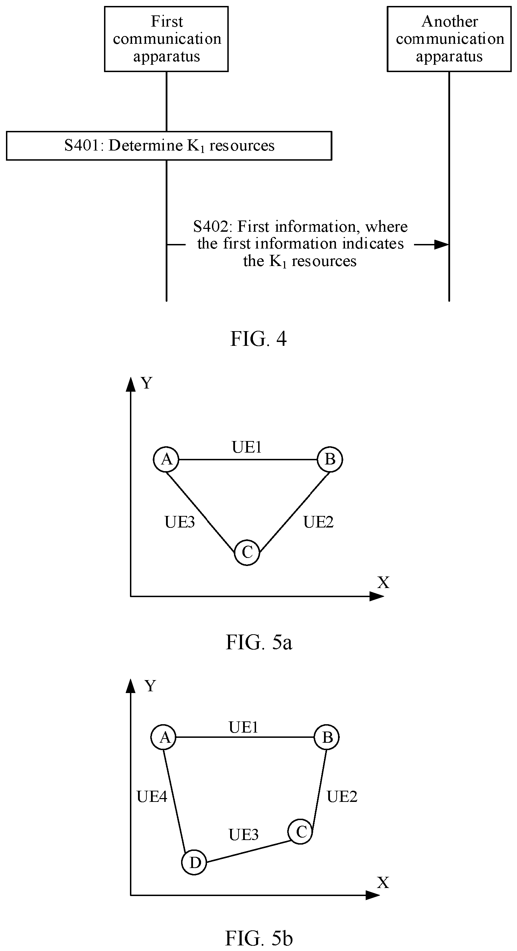

FIG. 4 is a diagram of a communication method according to this application. The method includes the following steps.

It should be noted that, in FIG. 4, an example in which a communication apparatus is used as an execution body of information receiving and sending processes is used for illustrating the method. However, an execution body of the information receiving and sending processes is not limited in this application. For example, in FIG. 4, the execution body of the method may be replaced with a chip, a chip system, a processor, a logical module, or software in the communication apparatus. A first communication apparatus may be a network device, a terminal device, or the like.

S401: The first communication apparatus determines K₁ resources, where the K₁ resources are included in M resources, K₁ is a positive integer, M is an integer greater than or equal to K₁, the M resources respectively correspond to M coordinate points in an N-dimensional coordinate space, resource indexes of the K₁ resources in the M resources are determined based on a solution in a solution set of an i₁-dimensional subspace in the N-dimensional coordinate space, N is an integer greater than 1, and i₁ is less than or equal to N.

S402: The first communication apparatus sends first information, where the first information indicates the K₁ resources.

The resource (for example, any one of the K₁ resources, any one of the M resources, or any one of K₂ resources mentioned below) in this application may be one or more resource elements (resource elements, REs), one or more resource blocks (resource blocks, RBs), or one or more physical resource blocks (physical resource blocks, PRBs).

Optionally, the resource in this application may be replaced with a time unit, a frequency domain unit, or the like.

In the foregoing technical solution, the first communication apparatus may send the first information in step S402 in a plurality of implementations, in other words, a receiver (that is, another communication apparatus in FIG. 4) of the first information may have a plurality of implementations. The following provides descriptions with reference to some examples.

Example 1: The first communication apparatus is a network device, and the receiver may be a terminal device. In other words, the network device may send the first information to the terminal device, so that the terminal device can subsequently perform communication by using the K₁ resources indicated by the first information.

Example 2: The first communication apparatus is a network device, and the receiver may be another network device. In other words, the network device may send the first information to another network device, so that the another network device can subsequently perform communication by using the K₁ resources indicated by the first information. For example, the network device and the another network device are respectively a baseband unit and a radio frequency unit, a building baseband unit (building baseband unit, BBU) and a radio remote unit (remote radio unit, RRU), a BBU and an active antenna unit (active antenna unit, AAU), a distributed unit (distributed unit, DU) and a radio unit (radio unit, RU), a radio equipment controller (radio equipment controller, REC) and a radio equipment (radio equipment, RE), and the like.

Example 3: The first communication apparatus is a terminal device, and the receiver may be another terminal device. In other words, one terminal device may send the first information to another terminal device, so that the another terminal device can subsequently perform communication by using the K₁ resources indicated by the first information, and the solution is applicable to a sidelink (sidelink, SL) communication scenario.

Example 4: The first communication apparatus is a module of a terminal device, and the receiver may be another module of the terminal device. In other words, the module in the terminal device may send the first information to the another module in the terminal device, so that the another module can subsequently perform communication by using the K₁ resources indicated by the first information. For example, the module and the another module are respectively a baseband unit and a radio frequency unit, a baseband chip and a radio frequency chip, and the like.

In a possible implementation, after step S401, the method further includes: The first communication apparatus performs communication based on the K₁ resources. In other words, the first communication apparatus may send a signal and/or receive a signal by using the K₁ resources, so that the first communication apparatus can serve as a resource user to implement signal transmission.

In a possible implementation, before S401, the method further includes: The first communication apparatus receives second information, where the second information indicates the K₁ resources. Correspondingly, a process in which the first communication apparatus determines the K₁ resources in S401 includes: The first communication apparatus determines the K₁ resources based on the second information. In other words, the first communication apparatus may receive the second information, and the first communication apparatus determines, based on the second information, the K₁ resources used for communication. The first communication apparatus may serve as a party for which a resource is scheduled, and the first communication apparatus may receive an indication from a resource scheduler, to determine the K₁ resources used for communication.

Optionally, the second information may be from another communication apparatus, for example, a second communication apparatus. The second communication apparatus may be a network device or a terminal device different from the first communication apparatus.

Optionally, the first information or the second information may indicate the K₁ resources in a plurality of manners. For example, the first information or the second information may carry one or more of indexes of the K₁ resources in time domain, indexes of the K₁ resources in frequency domain, and an indication of a resource quantity K₁.

In the technical solution based on FIG. 4, the K₁ resources determined by the first communication apparatus in S401 are included in the M resources, and the first communication apparatus may perform communication based on the K₁ resources in S402. The M resources respectively correspond to the M coordinate points in the N-dimensional coordinate space, and the resource indexes of the K₁ resources in the M resources are determined based on a solution in the solution set of the i₁-dimensional subspace in the N-dimensional coordinate space. Because different solutions included in the solution set of the i₁-dimensional subspace may correspond to different geometries in space, according to the implementation of determining the resource indexes of the K₁ resources in the M resources based on a solution in the solution set, communication interference between different communication devices can be reduced by using sparseness of intersections between different geometries (where a collision of resources used by different communication apparatuses corresponds to an intersection between geometries, and fewer intersections indicate fewer resource collisions), to improve communication performance.

In addition, in comparison with an implementation process of determining a resource by using a fixed codebook, when there are a plurality of solutions in the solution set of the i₁-dimensional subspace, the implementation of determining the resource indexes of the K₁ resources in the M resources based on a solution in the solution set can improve flexibility of determining the resource.

In addition, the M coordinate points corresponding to the M resources are determined by using a non-linear equation, so that the M coordinate points are in a non-linear space. Therefore, by using curvature of the non-linear space corresponding to the non-linear equation, a resource collision with a small girth (for example, the girth is equal to 3) can be suppressed, to reduce joint collisions between different resources, and further improve anti-interference capabilities of different communication devices.

In this application, the girth may be understood as a quantity of geometries forming an enclosed space in space. For example, when the geometry is a one-dimensional line, the girth may be understood as a quantity of lines forming an enclosed space in space. For another example, when the geometry is a two-dimensional face, the girth may be understood as a quantity of faces forming an enclosed space in space.

Coordinate points included in each geometry may correspond to resources (for example, when the M resources correspond to the M coordinate points as described above, the M coordinate points may be respectively used for identifying the M resources). In a plurality of geometries forming an enclosed space in space, there is an intersection between adjacent geometries, and there is no intersection between non-adjacent geometries. In other words, a resource collision exists between resources corresponding to the adjacent geometries, and no resource collision exists between resources corresponding to the non-adjacent geometries.

Optionally, the girth may be replaced with another term, for example, an annular length, a collision girth, or a joint collision girth.

It may be understood that, when each of the plurality of geometries forming an enclosed space in space is represented as a straight line (or a line segment) in space, because two straight lines cannot form an enclosed space, a quantity of geometries forming an enclosed space is at least 3.

In an example, in an example shown in FIG. 5a, that three users (UE1, UE2, and UE3) in a plurality of users respectively correspond to different resources in a resource set is used as an example. The resource set may include a resource A, a resource B, and a resource C, and the three resources may respectively correspond to three coordinate points on coordinate axes (that is, an X axis and a Y axis). An example in which an available resource of each UE is represented as a straight line is used.

In FIG. 5a, an available resource of UE1 is represented as a straight line on which the resource A and the resource B are located; an available resource of UE2 is represented as a straight line on which the resource B and the resource C are located; and an available resource of UE3 is represented as a straight line on which the resource A and the resource C are located. It can be learned from FIG. 5a that the coordinate points corresponding to the resources of the three users form an enclosed space (for example, a triangle) in space. In this case, because the coordinate points corresponding to the resources of the three users in the plurality of users form the closed space in space, it may be referred to as that a girth of the plurality of users is 3.

It should be understood that, in the example shown in FIG. 5a, the resource set may further include another resource. For example, the available resource of UE1 may further include another resource on the straight line on which the resource A and the resource B are located; the available resource of UE2 may further include another resource on the straight line on which the resource B and the resource C are located; the available resource of UE3 may further include another resource on the straight line on which the resource A and the resource C are located; and so on. In this case, the girth of the plurality of users is still 3.

In an example, in an example shown in FIG. 5b, that three users (UE1, UE2, UE3, and UE4) in a plurality of users respectively correspond to different resources in a resource set is used as an example. The resource set may include a resource A, a resource B, a resource C, and a resource D, and the four resources may respectively correspond to four coordinate points on coordinate axes (that is, an X axis and a Y axis). An example in which an available resource of each UE is represented as a straight line is used.

In FIG. 5b, an available resource of UE1 is represented as a straight line on which the resource A and the resource B are located; an available resource of UE2 is represented as a straight line on which the resource B and the resource C are located; an available resource of UE3 is represented as a straight line on which the resource C and the resource D are located; and an available resource of UE4 is represented as a straight line on which the resource A and the resource D are located. It can be learned from FIG. 5b that the coordinate points corresponding to the resources of the four users form an enclosed space (for example, a quadrilateral) in space.

In FIG. 5b, no resource collision exists between resources corresponding to non-adjacent geometries. To be specific, the resource of UE1 only collides with the resources of UE2 and UE4, and does not collide with the resource of UE3; the resource of UE2 only collides with the resources of UE1 and UE3, and does not collide with the resource of UE4; the resource of UE3 only collides with the resources of UE2 and UE4, and does not collide with the resource of UE1; and the resource of UE4 only collides with the resources of UE1 and UE3, and does not collide with the resource of UE2. Correspondingly, the coordinate points corresponding to the resources of the four users cannot form the triangle shown in FIG. 5a.

In addition, when coordinate points corresponding to resources of any three users in the plurality of users cannot form the triangle shown in FIG. 5a, because coordinate points corresponding to resources of four users in the plurality of users form an enclosed space in space, it may be referred to as that the girth of the plurality of users is 4.

It should be understood that, in the example shown in FIG. 5b, the resource set may further include another resource. For example, the available resource of UE1 may further include another resource on the straight line on which the resource A and the resource B are located; the available resource of UE2 may further include another resource on the straight line on which the resource B and the resource C are located; the available resource of UE3 may further include another resource on the straight line on which the resource C and the resource D are located; the available resource of UE4 may further include another resource on the straight line on which the resource A and the resource D are located; and so on. In this case, the girth of the plurality of users is still 4.

It can be learned from the foregoing content that, in a plurality of geometries forming an enclosed space in space, there is an intersection between adjacent geometries, and there is no intersection between non-adjacent geometries. In other words, a resource collision exists between resources corresponding to the adjacent geometries, and no resource collision exists between resources corresponding to the non-adjacent geometries. With reference to the examples shown in FIG. 5a and FIG. 5b, it can be learned that, for UE1 whose available resources are the resource A and the resource B, regardless of a value of the girth, a quantity of UEs whose resource collides with the resource of UE1 is 2. However, when the girth is 3 as shown in FIG. 5a, a quantity of UEs whose resource does not collide with the resource of UE1 is 0; and when the girth is 4 as shown in FIG. 5b, a quantity of UEs whose resource does not collide with the resource of UE1 is 1. By analogy, as a value of the girth increases, a quantity of UEs whose resource does not collide with the resource of UE1 increases.

In other words, when resource indexes of different communication devices are determined based on coordinate points included in different geometries, a larger minimum value of the girth indicates a larger quantity of geometries forming an enclosed space, that is, fewer collisions between different resources; on the contrary, a smaller minimum value of the girth indicates a smaller quantity of geometries forming an enclosed space, that is, more collisions between different resources.

Generally, in a coordinate space, a space corresponding to a linear equation is a linear space, and a space corresponding to a non-linear equation is a non-linear space. When a resource is represented as a straight line in space, using a two-dimensional space as an example, in a two-dimensional linear space (that is, a plane), because two lines that are not parallel to each other on the plane intersect at a point, if no two of three lines are parallel to each other, any two lines intersect at a point. This means that three intersections exist (because there are a total of three pairs of lines among the three lines), which are three vertices of a triangle. In other words, in a two-dimensional linear space (that is, a plane), any three straight lines that are not parallel to each other form a triangle, to be specific, a girth corresponding to an enclosed space formed between resources represented by coordinate points of the linear space is equal to 3. However, in a two-dimensional non-linear space, because there is a direction of curvature on a curved surface, not every direction has a straight line, that is, a quantity of straight lines on the curved surface is greatly reduced. In this case, no three straight lines can form a triangle, to be specific, a girth corresponding to an enclosed space formed between resources represented by coordinate points in the non-linear space is greater than 3.

In the technical solution shown in FIG. 4, the plurality of solutions included in the solution set of the i₁-dimensional subspace in the N-dimensional coordinate space correspond to a plurality of geometries, and a quantity of geometries forming an enclosed space in space in the plurality of geometries is greater than or equal to 4. In other words, because the M coordinate points corresponding to the M resources are determined by using a non-linear equation, a girth corresponding to different geometries corresponding to different resources determined by using the foregoing solution set is greater than or equal to 4. This can reduce joint collisions between different resources in comparison with an implementation in which a girth is equal to 3 because resource indexes are determined in a linear space (or straight space).

In a possible implementation, the non-linear equation is a homogeneous equation. Generally, a solution set of a homogeneous equation is coordinate points in a projective space; and a solution set of a non-homogeneous equation may not uniquely correspond to coordinate points in the projective space, and there is a probability that chaos occurs during indexing. Therefore, when the non-linear equation is a homogeneous equation, the non-linear equation is more stable and reliable in use.

In a possible implementation, a degree of at least one polynomial included in the non-linear equation is greater than or equal to 2. In this manner, a space represented by the equation can be non-linear. Optionally, a degree of any polynomial included in the non-linear equation is greater than or equal to 2.

In a possible implementation, a quantity of unknowns included in the non-linear equation is greater than or equal to 4.

Optionally, an example in which the quantity of unknowns is L and the girth is G is used, and L and G satisfy: $G = \left⌈L/2\right⌉ + 2 ,$ where
[L/2] represents that a value of L/2 is rounded up.

Therefore, in a process of determining a resource, the quantity of unknowns included in the non-linear equation may be set, so that the girth is controllable, and flexibility of implementing the solution is improved.

In a possible implementation, the N-dimensional coordinate space is an N-dimensional affine space or an N-dimensional projective space. The N-dimensional coordinate space used for determining the K₁ resources may be implemented in any one of the foregoing manners, to improve flexibility of implementing the solution.

Optionally, the N-dimensional coordinate space is an N-dimensional projective space, the N-dimensional projective space is represented as PG(N, p), and p is an order of the N-dimensional projective space.

In a possible implementation, values of N and p are determined based on a value of M. Specifically, in the N-dimensional projective space, a quantity of coordinate points in the N-dimensional projective space in space may be determined depending on the values of N and p. Therefore, the values of N and p may be determined based on the total quantity M of resources. In this manner, the K₁ resources used for communication can be determined in the N-dimensional projective space that adapts to the total quantity M of resources.

Optionally, a total quantity of coordinate points in the N-dimensional projective space satisfies: $y = \frac{{p}^{N + 1} - 1}{p - 1} ;$ and $M \leq y ,$ where
y is the total quantity of coordinate points in the N-dimensional projective space.

In a possible implementation, the values of N and p are determined based on third information, and the third information indicates at least one of a lower limit value of a resource quantity of communication resources, an upper limit value of the resource quantity of communication resources, and a quantity of communication apparatuses that perform communication on the M resources. Specifically, in the N-dimensional projective space, resource quantities determined by using different solutions in a solution set of a subspace in the N-dimensional projective space may be determined depending on the values of N and p. At least one of the foregoing items may be used for determining the values of N and p. In this manner, the resource quantity of communication resources may be adjusted and controlled based on the values of N and p.

Optionally, the lower limit value of the resource quantity of communication resources may be a lower limit value of a resource quantity requirement for the communication resources, in other words, the lower limit value indicates a minimum value of the resource quantity of communication resources. Similarly, the upper limit value of the resource quantity of communication resources may be an upper limit value of a resource quantity requirement for the communication resources, in other words, the lower limit value indicates a maximum value of the resource quantity of communication resources. A determining party (for example, the first communication apparatus) that determines the values of N and p may determine the lower limit value and/or the upper limit value of the resource quantity of communication resources based on a service requirement of the determining party (or indication information of a communication peer end).

Optionally, the determining party (for example, the first communication apparatus) that determines the values of N and p may determine, based on the service requirement of the determining party (or quantity information of the communication peer end), the quantity of communication apparatuses that perform communication on the M resources.

Optionally, the solution set of the i₁-dimensional subspace in the N-dimensional coordinate space is a solution set of a system of equations including N-i₁ equations.

Optionally, any one of the N-i₁ equations satisfies: $a_ 0 * X_ 0 + a_ 1 * X_ 1 + … + a_N * X_N = 0 ,$ where
X_0, X_1, ..., and X_N represent unknowns, and a_0, ..., and a_N are all from a Galois field GF(p).

In a possible implementation, the method further includes: The first communication apparatus determines K₂ resources, where the K₂ resources are included in the M resources, K₂ is a positive integer, M is an integer greater than or equal to K₂, resource indexes of the K₂ resources in the M resources are determined based on a solution in a solution set of an i₂-dimensional subspace in the N-dimensional coordinate space, N is an integer greater than 1, i₂ is less than or equal to N, and K₁ = K₂ and i₁ =i₂, or K₁ ≠ K₂ and i₁ ≠ i₂. The first communication apparatus performs communication based on the K₂ resources. Specifically, in addition to the K₁ resources, the first communication apparatus may further determine the K₂ resources, and separately communicate with different communication apparatuses based on the K₁ resources and the K₂ resources.

Optionally, K₁ =K₂ and i₁=i₂, or K₁ ≠ K₂ and i₁ ≠ i₂.

For example, the first communication apparatus may communicate with the second communication apparatus based on the K₁ resources, and the first communication apparatus may communicate with a third communication apparatus based on the K₂ resources. The solution set of the i₁-dimensional subspace in the N-dimensional coordinate space is the solution set of the system of equations including the N-i₁ equations. Correspondingly, the solution set of the i₂-dimensional subspace in the N-dimensional coordinate space is a solution set of a system of equations including N-i₂ equations.

Because resource quantities corresponding to different solutions with a same equation quantity may be the same, when i₁=i₂, a quantity (that is, K₁) of resources for communication between the first communication apparatus and the second communication apparatus is the same as a quantity (that is, K₂) of resources for communication between the first communication apparatus and the third communication apparatus. In this manner, based on the N-dimensional coordinate space by using sparseness of intersections between different geometries, communication interference between different communication devices can be reduced, and a process of allocating a same quantity of resources to different communication apparatuses can be implemented, to adapt to a scenario in which a plurality of communication apparatuses have a same resource quantity requirement.

Because resource quantities corresponding to different solutions with different equation quantities may be different, when i₁ ≠ i₂, a quantity (that is, K₁) of resources for communication between the first communication apparatus and the second communication apparatus may be different from a quantity (that is, K₂) of resources for communication between the first communication apparatus and the third communication apparatus. In this manner, based on the N-dimensional coordinate space by using sparseness of intersections between different geometries, communication interference between different communication devices can be reduced, and a process of allocating different quantities of resources to different communication apparatuses can be implemented, to adapt to a scenario in which a plurality of communication apparatuses have different resource quantity requirements. For example, solution sets with a smaller quantity of equations (higher dimensions) are more than solution sets with a larger quantity of equations (lower dimensions), and correspond to more resources, to support coexistence of communication apparatuses with different rates (where a larger resource quantity indicates a higher rate, and on the contrary, a smaller resource quantity indicates a lower rate).

It may be understood that, when i₁ ≠ i₂, an intersection between a space with a higher dimension and a space with a lower dimension depends on the space with a lower dimension. For example, two straight lines intersect at at most one point, and a plane and a straight line (not on the plane) intersect at at most one point. This also ensures a minimum collision when communication apparatuses with different rates coexist.

It can be learned from the foregoing descriptions that, in step S401, the K₁ resources determined by the first communication apparatus are included in the M resources, the M resources respectively correspond to the M coordinate points in the N-dimensional coordinate space, and the M coordinate points are determined by using a non-linear equation. For ease of understanding, the following uses some examples to describe a process of determining the M coordinate points by using a non-linear equation.

In an implementation example A, for a resource group including 15 (that is, M=15) resources, PG(4, 2) (that is, N=4 and p=2) is selected as a coordinate space. It can be learned from the foregoing definition of the projective space that a total quantity of points ofPG(4, 2) satisfies that p^{N} + p^{N-1} + ··· + p + 1 = 2⁴ + 2³ + 2² + 2 + 1 = 31, that is, the total quantity of points of PG(4, 2) may represent 31 resources.

For example, in the implementation example A, each of the 31 resources is determined by using an equation including five unknowns, in other words, a coordinate corresponding to each resource include five elements (where values of these elements may be 0 or 1 in a column in which coordinates are located in the following Table 1). Each resource corresponds to the coordinates. For example, in the following Table 1, there are a total of 31 coordinate points, which respectively correspond to the 31 resources.

**Table 1**

| Resource index | Coordinate |
|---|---|
| 1 | [1, 0, 0, 0, 0] |
| 2 | [1, 0, 0, 0, 1] |
| 3 | [1, 0, 0, 1, 0] |
| 4 | [1, 0, 0, 1, 1] |
| 5 | [1, 0, 1, 0, 0] |
| 6 | [1, 0, 1, 0, 1] |
| 7 | [1, 0, 1, 1, 0] |
| 8 | [1, 0, 1, 1, 1] |
| 9 | [1, 1, 0, 0, 0] |
| 10 | [1, 1, 0, 0, 1] |
| 11 | [1, 1, 0, 1, 0] |
| 12 | [1, 1, 0, 1, 1] |
| 13 | [1, 1, 1, 0, 0] |
| 14 | [1, 1, 1, 0, 1] |
| 15 | [1, 1, 1, 1, 0] |
| 16 | [1, 1, 1, 1, 1] |
| 17 | [0, 1, 0, 0, 0] |
| 18 | [0, 1, 0, 0, 1] |
| 19 | [0, 1, 0, 1, 0] |
| 20 | [0, 1, 0, 1, 1] |
| 21 | [0, 1, 1, 0, 0] |
| 22 | [0, 1, 1, 0, 1] |
| 23 | [0, 1, 1, 1, 0] |
| 24 | [0, 1, 1, 1, 1] |
| 25 | [0, 0, 1, 0, 0] |
| 26 | [0, 0, 1, 0, 1] |
| 27 | [0, 0, 1, 1, 0] |
| 28 | [0, 0, 1, 1, 1] |
| 29 | [0, 0, 0, 1, 0] |
| 30 | [0, 0, 0, 1, 1] |
| 31 | [0, 0, 0, 0, 1] |

In Example 1, the non-linear equation is ${x}_{0}^{2} + {x}_{1} {x}_{2} + {x}_{3} {x}_{4} = 0$. There are a total of 15 points that satisfy the non-linear equation, which are respectively the 15 coordinates corresponding to the resource indexes 4, 8, 12, 13, 14, 15, 17, 18, 19, 24, 25, 26, 29, and 31 in Table 1, and respectively correspond to the 15 (that is, M=15) resources.

In an example of the coordinate point [1: 0: 0: 1: 1] corresponding to the resource index 4, that x₀=1, x₁=0, x₂=0, x₃=1, and x₄=1 is satisfied. The coordinate point is substituted into the equation to obtain: 1² + 0 + 1 * 1 = 2 = 0. A last step "2=0" is because of a Galois field operation of 2=0 mod 2 and p=2. More generally, in the Galois field with a prime number of p, "2=0" is because 2=0 mod p. In another example of the coordinate point [0: 1: 1: 1: 1] corresponding to the resource index 24, that x₀=0, x₁=1, x₂=1, x₃=1, and x₄=1 is satisfied. The coordinate point is substituted into the equation to obtain: 0² + 1 * 1 + 1 * 1 = 2 = 0. Similarly, a last step "2=0" is because of a Galois field operation of 2=0 mod 2 and p=2.

Similarly, in Example 1, the other 13 coordinates (that is, the coordinates corresponding to the resource indexes 8, 12, 13, 14, 15, 17, 18, 19, 25, 26, 29, and 31) in the 15 coordinates also satisfy the foregoing non-linear equation.

Because the coordinate points of the 15 coordinates in Example 1 satisfy the non-linear equation, it may be considered as that the points corresponding to the 15 coordinates form a curved space, but there is a non-curved space such as a straight line in the curved space, where the non-curved space may be used for resource allocation.

It may be understood that, in Example 1, for the 31 coordinates in Table 1, the other 16 coordinates (that is, the coordinates corresponding to the resource indexes 1, 2, 3, 5, 6, 7, 9, 10, 11, 16, 20, 21, 22, 23, 28, and 30) than the 15 coordinates do not satisfy the non-linear equation. In an example of the coordinate point [1: 0: 0: 0: 0] corresponding to the resource index 1, that x₄=1, x₁=0, x₂=0, x₃=0, and x₄=0 is satisfied. The coordinate point is substituted into the equation to obtain: 1² + 0 + 0 = 1 ≠ 0. In another example of the coordinate point [0: 0: 0: 1: 1] corresponding to the resource index 30, that x₀=0, x₁=0, x₂=0, x₃=1, and x₄=1 is satisfied. The coordinate point is substituted into the equation to obtain: 0 + 0 + 1 = 1 ≠ 0. Similarly, the other 14 coordinates (that is, the coordinates corresponding to the resource indexes 2, 3, 5, 6, 7, 9, 10, 11, 16, 20, 21, 22, 23, and 28) in the 16 coordinates do not satisfy the foregoing non-linear equation either.

Optionally, in Example 1, a quantity of equations corresponding to solutions in a solution set of a one-dimensional (i=1) coordinate space is 3 (N-i=4-1=3).

Using a system of equations 1: x₀ = 0, x₂ = 0, x₃ = 0 as an example, three corresponding solutions are [0:1:0:0:0], [0:1:0:0:1], and [0:0:0:0:1] in Table 1, and corresponding resource indexes are 17, 18, and 31 respectively.

Using a system of equations 2: x₀ = x₂, x₁ = x₃, x₁ + x₂ = x₄ as an example, three corresponding solutions are [1, 0, 1, 1, 1], [1, 1, 1, 1, 0], and [0, 1, 0, 0, 1] in Table 1, and corresponding resource indexes are 8, 15, and 18 respectively.

Using a system of equations 3: x₀ = x₁, x₁ = x₂, x₄ = 0 as an example, three corresponding solutions are [1, 1, 1, 0, 0], [1, 1, 1, 1, 0], and [0, 0, 0, 1, 0] in Table 1, and corresponding resource indexes are 13, 15, and 29 respectively.

Using a system of equations 4: x₀ = 0, x₂ = 0, x₄ = 0 as an example, three corresponding solutions are [0:1:0:0:0], [0:1:0:1:0], and [0:0:0:1:0] in Table 1, and corresponding resource indexes are 17, 19, and 29 respectively.

In the example shown in FIG. 4, the resource indexes of the K₁ resources and the resource indexes of the K₂ resources may be resource indexes corresponding to any two different equation sets in the foregoing four equation sets.

It can be learned that, for resources corresponding to the system of equations 1 to the system of equations 4, the resource corresponding to the system of equations 1 collides with the resource corresponding to the system of equations 2 and the resource corresponding to the system of equations 4, and the resource corresponding to the system of equations 1 does not collide with the resource corresponding to the system of equations 3; the resource corresponding to the system of equations 2 collides with the resource corresponding to the system of equations 3 and the resource corresponding to the system of equations 1, and the resource corresponding to the system of equations 2 does not collide with the resource corresponding to the system of equations 4; the resource corresponding to the system of equations 3 collides with the resource corresponding to the system of equations 2 and the resource corresponding to the system of equations 4, and the resource corresponding to the system of equations 3 does not collide with the resource corresponding to the system of equations 1; and the resource corresponding to the system of equations 4 collides with the resource corresponding to the system of equations 1 and the resource corresponding to the system of equations 3, and the resource corresponding to the system of equations 4 does not collide with the resource corresponding to the system of equations 2.

In other words, the resources corresponding to the four equation sets may respectively correspond to the available resources of the four UEs shown in FIG. 5b. A coordinate corresponding to any one of the foregoing equation sets may satisfy the non-linear equation in Example 1. In this manner, by using curvature of a non-linear space corresponding to the non-linear equation, a resource collision with a small girth (for example, the girth is equal to 3) can be suppressed, to reduce joint collisions between different resources, and further improve anti-interference capabilities of different communication devices.

In Example 2, the non-linear equation is ${x}_{0}^{2} + {x}_{1}^{2} + {x}_{1} {x}_{2} + {x}_{3} {x}_{4} = 0$. There are a total of 15 points that satisfy the non-linear equation, which are respectively the 15 coordinates corresponding to the resource indexes 4, 8, 9, 10, 11, 16, 20, 21, 22, 23, 25, 26, 27, 29, and 31 in Table 1, and respectively correspond to the 15 (that is, M=15) resources.

In an example of the coordinate point [1: 0: 0: 1: 1] corresponding to the resource index 4, that x₀=1, x₁=0, x₂=0, x₃=1, and x₄=1 is satisfied. The coordinate point is substituted into the equation to obtain: 1² + 0 + 0 + 1 = 2 = 0. A last step "2=0" is because of a Galois field operation of 2=0 mod 2 and p=2. In another example of the coordinate point [0: 0: 0: 0: 1] corresponding to the resource index 31, that x₀=0, x₁=0, x₂=0, x₃=0, and x₄=1 is satisfied. The coordinate point is substituted into the equation to obtain: 0² + 0² + 0 + 0 = 0.

Similarly, in Example 2, the other 13 coordinates (that is, the coordinates corresponding to the resource indexes 8, 9, 10, 11, 16, 20, 21, 22, 23, 25, 26, 27, and 29) in the 15 coordinates also satisfy the foregoing non-linear equation.

Because the coordinate points of the 15 coordinates in Example 2 satisfy the non-linear equation, it may be considered as that the points corresponding to the 15 coordinates form a curved space, but there is a non-curved space such as a straight line in the curved space, where the non-curved space may be used for resource allocation.

It may be understood that, in Example 2, for the 31 coordinates in Table 1, the other 16 coordinates (that is, the coordinates corresponding to the resource indexes 1, 2, 3, 5, 6, 7, 12, 13, 14, 15, 17, 18, 19, 24, 28, and 30) than the 15 coordinates do not satisfy the non-linear equation. In an example of the coordinate point [1: 0: 0: 0: 0] corresponding to the resource index 1, that x₀=1, x₁=0, x₂=0, x₃=0, and x₄=0 is satisfied. The coordinate point is substituted into the equation to obtain: 1² + 0 + 0 + 0 = 1 ≠ 0. In another example of the coordinate point [0: 0: 0: 1: 1] corresponding to the resource index 30, that x₀=0, x₁=0, x₂=0, x₃=1, and x₄=1 is satisfied. The coordinate point is substituted into the equation to obtain: 0 + 0 + 0 + 1 = 1 ≠ 0. Similarly, the other 14 coordinates (that is, the coordinates corresponding to the resource indexes 2, 3, 5, 6, 7, 12, 13, 14, 15, 17, 18, 19, 24, and 28) in the 16 coordinates do not satisfy the foregoing non-linear equation either.

In an implementation example B, for a resource group including 15 (that is, M=15) resources, PG(4, 3) (that is, N=4 and p=3) is selected as a coordinate space. It can be learned from the foregoing definition of the projective space that a total quantity of points ofPG(4, 3) satisfies that p^{N} + p^{N-1} + ··· + p + 1 = 3⁴ + 3³ + 3² + 3 + 1 =121, that is, the total quantity of points of PG(4, 3) may represent 121 resources.

Similarly, in the implementation example B, using an example in which each of the 121 resources is determined by using an equation including five unknowns, in other words, a coordinate corresponding to each resource include five elements. Each resource corresponds to the coordinates, and 121 coordinates may be obtained and respectively correspond to the 121 resources.

In Example 3, the non-linear equation is ${x}_{0}^{2} + {x}_{1} {x}_{2} + {x}_{3} {x}_{4} = 0$. Points that satisfy the non-linear equation have a total of 40 coordinates, respectively correspond to the 40 (that is, M=40) resources, and are respectively as follows:
[1, 0, 0, 1, 2], [1, 0, 0, 2, 1], [1, 0, 1, 1, 2], [1, 0, 1, 2, 1], [1, 0, 2, 1, 2], [1, 0, 2, 2, 1], [1, 1, 0, 1, 2], [1, 1, 0, 2, 1], [1, 1, 1, 1, 1], [1, 1, 1, 2, 2], [1, 1, 2, 0, 0], [1, 1, 2, 0, 1], [1, 1, 2, 0, 2], [1, 1, 2, 1, 0], [1, 1, 2, 2, 0], [1, 2, 0, 1, 2], [1, 2, 0, 2, 1], [1, 2, 1, 0, 0], [1, 2, 1, 0, 1], [1, 2, 1, 0, 2], [1, 2, 1, 1, 0], [1, 2, 1, 2, 0], [1, 2, 2, 1, 1], [1, 2, 2, 2, 2], [0, 1, 0, 0, 0], [0, 1, 0, 0, 1], [0, 1, 0, 0, 2], [0, 1, 0, 1, 0], [0, 1, 0, 2, 0], [0, 1, 1, 1, 2], [0, 1, 1, 2, 1], [0, 1, 2, 1, 1], [0, 1, 2, 2, 2], [0, 0, 1, 0, 0], [0, 0, 1, 0, 1], [0, 0, 1, 0, 2], [0, 0, 1, 1, 0], [0, 0, 1, 2, 0], [0, 0, 0, 1, 0], and [0, 0, 0, 0, 1].

Using an example of a 1^{st} coordinate [1, 0, 0, 1, 2], that x₀=1, x₁=0, x₂=0, x₃=1, and x₄=2 is satisfied. The coordinate is substituted into the equation to obtain: 1² + 0 + 2 = 3 = 0. A last step "3=0" is because of a Galois field operation of 3=0 mod 3 and 3=2. Using another example of a last coordinate [0, 0, 0, 0, 1], that x₀=0, x₁=0, x₂=0, x₃=0, and x₄=1 is satisfied. The coordinate is substituted into the equation to obtain: 0 + 0 + 0 + 0 = 0.

Because the coordinate points of the 40 coordinates in Example 3 satisfy the non-linear equation, it may be considered as that the points corresponding to the 40 coordinates form a curved space, but there is a non-curved space such as a straight line in the curved space, where the non-curved space may be used for resource allocation.

It may be understood that, in Example 3, the other 81 coordinates than the foregoing 40 coordinates in the 121 coordinates do not satisfy the non-linear equation. For details, refer to the implementation of the foregoing implementation example A.

In Example 4, the non-linear equation is ${x}_{0}^{2} + {x}_{1}^{2} + {x}_{1} {x}_{2} + {x}_{3} {x}_{4} = 0$. Points that satisfy the non-linear equation have a total of 40 coordinates, respectively correspond to the 40 (that is, M=40) resources, and are respectively as follows:
[1, 0, 0, 1, 2], [1, 0, 0, 2, 1], [1, 0, 1, 1, 2], [1, 0, 1, 2, 1], [1, 0, 2, 1, 2], [1, 0, 2, 2, 1], [1, 1, 0, 1, 1], [1, 1, 0, 2, 2], [1, 1, 1, 0, 0], [1, 1, 1, 0, 1], [1, 1, 1, 0, 2], [1, 1, 1, 1, 0], [1, 1, 1, 2, 0], [1, 1, 2, 1, 2], [1, 1, 2, 2, 1], [1, 2, 0, 1, 1], [1, 2, 0, 2, 2], [1, 2, 1, 1, 2], [1, 2, 1, 2, 1], [1, 2, 2, 0, 0], [1, 2, 2, 0, 1], [1, 2, 2, 0, 2], [1, 2, 2, 1, 0], [1, 2, 2, 2, 0], [0, 1, 0, 1, 2], [0, 1, 0, 2, 1], [0, 1, 1, 1, 1], [0, 1, 1, 2, 2], [0, 1, 2, 0, 0], [0, 1, 2, 0, 1], [0, 1, 2, 0, 2], [0, 1, 2, 1, 0], [0, 1, 2, 2, 0], [0, 0, 1, 0, 0], [0, 0, 1, 0, 1], [0, 0, 1, 0, 2], [0, 0, 1, 1, 0], [0, 0, 1, 2, 0], [0, 0, 0, 1, 0], and [0, 0, 0, 0, 1].

Using an example of a 1^{st} coordinate [1, 0, 0, 1, 2], that x₀=1, x₁=0, x₂=0, x₃=1, and x₄=2 is satisfied. The coordinate is substituted into the equation to obtain: 1² + 0 + 0 + 2 = 3 = 0. A last step "3=0" is because of a Galois field operation of 3=0 mod 3 and 3=2. Using another example of a last coordinate [0, 0, 0, 0, 1], that x₀=0, x₁=0, x₂=0, x₃=0, and x₄=1 is satisfied. The coordinate is substituted into the equation to obtain: 0 + 0 + 0 + 0 = 0.

Because the coordinate points of the 40 coordinates in Example 4 satisfy the non-linear equation, it may be considered as that the points corresponding to the 40 coordinates form a curved space, but there is a non-curved space such as a straight line in the curved space, where the non-curved space may be used for resource allocation.

It may be understood that, in Example 3, the other 81 coordinates than the foregoing 40 coordinates in the 121 coordinates do not satisfy the non-linear equation. For details, refer to the implementation of the foregoing implementation example A.

It can be learned from the foregoing implementation processes that the resource indexes of the K₁ resources in the M resources are one solution in the solution set of the i₁-dimensional subspace in the N-dimensional coordinate space. When values such as N and i₁ are determined, the solution set of the i₁-dimensional subspace in the N-dimensional coordinate space is determined. The solution set may also be referred to as a codebook set, and a solution in the solution set may be referred to as a codebook in the codebook set. In S401, the first communication apparatus may determine the resource indexes without the foregoing N-dimensional coordinate space, instead, the first communication apparatus may determine the resource indexes of the K₁ (or K₂) resources in the M resources based on one codebook in the codebook set. The following describes the implementation process with reference to another implementation process of the method shown in FIG. 4.

S401: The first communication apparatus determines K₁ resources, where resource indexes of the K₁ resources are determined by using one codebook in a codebook set.

S402: The first communication apparatus sends first information, where the first information indicates the K₁ resources.

It should be noted that, for an implementation process of step S402, refer to the foregoing descriptions.

Specifically, when the resource indexes of the K₁ resources are determined by using one codebook in the codebook set, because a codebook in the codebook set may correspond to some or all solutions in the solution set of the i₁-dimensional subspace in the N-dimensional coordinate space, the foregoing technical effects can also be achieved in this case. For example, because different codebooks in the codebook set correspond to different solutions included in the solution set of the i₁-dimensional subspace, and the different solutions may correspond to different geometries in space, according to the implementation of determining the resource indexes of the K₁ resources in the M resources by using one codebook in the codebook set (that is, one solution in the solution set), communication interference of different communication devices can be reduced by using sparseness of intersections between different geometries, to improve communication performance.

In addition, a coordinate corresponding to each codebook in the foregoing codebook set may satisfy the non-linear equation. In this manner, by using curvature of a non-linear space corresponding to the non-linear equation, a resource collision with a small girth (for example, the girth is equal to 3) can be suppressed, to reduce joint collisions between different resources, and further improve anti-interference capabilities of different communication devices.

It should be noted that the first communication apparatus may determine another resource (for example, the K₂ resources described above) by using the codebook set. For a specific implementation process, refer to the foregoing descriptions. Details are not described herein again.

Optionally, in a process in which the first communication apparatus determines the K₁ resources by using the codebook set, the first communication apparatus may send the first information to another communication apparatus to indicate the K₁ resources. For example, the first information may include positions and indexes of the resource indexes of the K₁ resources in the codebook set.

Optionally, before the first communication apparatus determines the K₁ resources by using the codebook set, the first communication apparatus may receive second information sent by another communication apparatus (for example, the third communication apparatus described above) and indicating K₁ the resources. For example, the second information may include positions and indexes of the resource indexes of the K₁ resources in the codebook set.

For example, the first information and/or the second information may indicate some or all elements included in a codebook corresponding to one codebook index in any one of the following tables.

It may be understood that, because the resource indexes of the K₁ resources in the M resources are one solution in the solution set of the i₁-dimensional subspace in the N-dimensional coordinate space, in the process in which the first communication apparatus determines the K₁ resources by using the codebook set, for codebooks included in the codebook set, refer to the foregoing implementation process using the N-dimensional coordinate space (and a related subspace), to implement a corresponding technical effect.

For ease of understanding, the following provides some implementation examples of the codebook set by using Table 2 to Table 6.

In some embodiments, in the following examples, information in any one of Table 2 to Table 6 is considered as one codebook set, and a value corresponding to an index in any one of the tables is a codebook in the codebook set. However, in actual practice, the information in any one of Table 2 to Table 6 may be considered as one codebook, and a value corresponding to an index in any one of the tables may be a code in the codebook. In other words, the following codebook sets may be replaced with a "codebook", and the following codebook may be replaced with a "code". Alternatively, information in the following tables may be replaced with other descriptions, for example, resource set-resource index-resource or resource block set-resource block index-resource block.

In some embodiments, in the following codebook sets, an example in which each codebook set is implemented by using a table is used. However, in actual practice, codebooks included in different codebook sets may alternatively be implemented in matrices, sequences, or other manners.

In some embodiments, in the following examples of the codebook sets, the codebook set may be understood as a set including resource allocation codes. Each codebook is a column of ordered 0 and 1. Each position in the codebook represents a resource. In the following examples, 0 on a position indicates that a resource cannot be occupied (by a device to which the code is allocated); on the contrary, 1 on a position indicates that a resource can be occupied; or 1 on a position indicates that a resource cannot be occupied (by a device to which the code is allocated); on the contrary, 0 on a position indicates that a resource can be occupied. The former is used as an example for description below.

In an implementation example, in a case of PG(4, 2) (that is, p=2 and N=4), an implementation example of the codebook set is shown in Table 2.

It should be understood that, in the codebook set shown in Table 2, an example in which each codebook corresponds to a line in an N-dimensional space is used. In the implementation process of PG(4, 2) shown in the foregoing implementation example A, when i=1, a quantity of points on each line (that is, a quantity of available resources of each codebook) is K₁=pⁱ + pⁱ⁻¹ + ··· + p + 1=p+1=3, and a total quantity of points ofPG(4, 2) satisfies that p^{N} + p^{N-1} + ··· + p + 1 = 2⁴ + 2³ + 2² + 2 + 1 = 31, that is, the total quantity of points of PG(4, 2) may represent 31 resources. A quantity of i-dimensional spaces (where i=1, that is, the quantity of i-dimensional spaces may also be referred to as a quantity of solutions included in the solution set of the i-dimensional subspace in the N-dimensional coordinate space, a quantity of lines in the N-dimensional space, or a quantity of codebooks in the codebook set) is $\frac{{\prod }_{k = N - i + 1}^{N + 1} \left({p}^{k}-1\right)}{{\prod }_{i = 1}^{i + 1} \left({p}^{l}-1\right)} = 155$.

**Table 2**

| Codebook index | Codebook |
|---|---|
| 0 | (0, 0, 0, 0, 0, 0, 0, 0, 0, 0, 0, 0, 0, 1, 1, 0, 0, 0, 0, 0, 0, 0, 0, 0, 0, 0, 0, 0, 0, 1, 0) |
| 1 | (0, 0, 0, 0, 0, 0, 0, 0, 0, 0, 0, 0, 0, 0, 1, 1, 0, 0, 0, 0, 0, 0, 0, 0, 0, 0, 0, 0, 0, 0, 1) |
| 2 | (0, 1, 0, 1, 0, 0, 0, 0, 0, 0, 0, 0, 0, 0, 0, 0, 0, 0, 0, 0, 0, 0, 0, 0, 0, 0, 0, 0, 1, 0, 0) |
| 3 | (0, 0, 0, 0, 0, 1, 0, 0, 0, 0, 1, 0, 0, 0, 0, 0, 0, 0, 0, 0, 0, 0, 0, 1, 0, 0, 0, 0, 0, 0, 0) |
| 4 | (0, 1, 0, 0, 0, 0, 0, 1, 0, 0, 0, 0, 0, 0, 0, 0, 0, 0, 0, 0, 0, 0, 0, 0, 0, 0, 1, 0, 0, 0, 0) |
| 5 | (0, 0, 0, 0, 0, 1, 0, 0, 0, 1, 0, 0, 0, 0, 0, 0, 0, 0, 0, 0, 1, 0, 0, 0, 0, 0, 0, 0, 0, 0, 0) |
| 6 | (0, 0, 0, 0, 0, 0, 0, 0, 1, 1, 0, 0, 0, 0, 0, 0, 0, 0, 0, 0, 0, 0, 0, 0, 0, 0, 0, 0, 0, 0, 1) |
| 7 | (0, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0) |
| 8 | (0, 0, 0, 0, 0, 0, 0, 0, 0, 0, 0, 0, 0, 0, 0, 0, 0, 0, 0, 1, 0, 0, 0, 1, 1, 0, 0, 0, 0, 0, 0) |
| 9 | (0, 0, 0, 0, 0, 0, 1, 0, 0, 0, 0, 0, 0, 1, 0, 0, 0, 0, 0, 1, 0, 0, 0, 0, 0, 0, 0, 0, 0, 0, 0) |
| 10 | (1, 0, 0, 0, 0, 1, 0, 0, 0, 0, 0, 0, 0, 0, 0, 0, 0, 0, 0, 0, 0, 0, 0, 0, 0, 1, 0, 0, 0, 0, 0) |
| 11 | (0, 0, 0, 0, 0, 0, 0, 0, 1, 0, 0, 0, 0, 0, 1, 0, 0, 0, 0, 0, 0, 0, 0, 0, 0, 0, 1, 0, 0, 0, 0) |
| 12 | (0, 0, 0, 0, 0, 0, 0, 0, 0, 0, 0, 0, 0, 0, 0, 0, 0, 1, 0, 0, 0, 1, 0, 0, 1, 0, 0, 0, 0, 0, 0) |
| 13 | (0, 0, 1, 0, 0, 0, 0, 0, 0, 0, 1, 0, 0, 0, 0, 0, 1, 0, 0, 0, 0, 0, 0, 0, 0, 0, 0, 0, 0, 0, 0) |
| 14 | (0, 0, 0, 0, 0, 1, 0, 0, 0, 0, 0, 0, 0, 0, 1, 0, 0, 0, 0, 1, 0, 0, 0, 0, 0, 0, 0, 0, 0, 0, 0) |
| 15 | (0, 0, 0, 0, 0, 0, 0, 1, 0, 0, 0, 0, 0, 1, 0, 0, 0, 0, 1, 0, 0, 0, 0, 0, 0, 0, 0, 0, 0, 0, 0) |
| 16 | (0, 0, 0, 1, 0, 1, 0, 0, 0, 0, 0, 0, 0, 0, 0, 0, 0, 0, 0, 0, 0, 0, 0, 0, 0, 0, 1, 0, 0, 0, 0) |
| 17 | (1, 0, 0, 0, 0, 0, 0, 0, 0, 0, 0, 0, 0, 0, 1, 0, 0, 0, 0, 0, 0, 0, 1, 0, 0, 0, 0, 0, 0, 0, 0) |
| 18 | (1, 0, 0, 1, 0, 0, 0, 0, 0, 0, 0, 0, 0, 0, 0, 0, 0, 0, 0, 0, 0, 0, 0, 0, 0, 0, 0, 0, 0, 1, 0) |
| 19 | (0, 0, 0, 0, 1, 0, 0, 0, 0, 0, 0, 1, 0, 0, 0, 0, 0, 0, 0, 0, 0, 0, 0, 1, 0, 0, 0, 0, 0, 0, 0) |
| 20 | (0, 0, 0, 0, 0, 0, 0, 0, 0, 0, 0, 0, 0, 0, 0, 0, 1, 0, 0, 0, 1, 0, 0, 0, 1, 0, 0, 0, 0, 0, 0) |
| 21 | (0, 0, 1, 1, 0, 0, 0, 0, 0, 0, 0, 0, 0, 0, 0, 0, 0, 0, 0, 0, 0, 0, 0, 0, 0, 0, 0, 0, 0, 0, 1) |
| 22 | (0, 0, 0, 0, 0, 0, 0, 0, 0, 0, 0, 0, 0, 0, 0, 0, 0, 0, 0, 0, 0, 0, 0, 0, 0, 0, 1, 1, 0, 0, 1) |
| 23 | (1, 0, 0, 0, 0, 0, 0, 0, 0, 0, 0, 0, 1, 0, 0, 0, 0, 0, 0, 0, 1, 0, 0, 0, 0, 0, 0, 0, 0, 0, 0) |
| 24 | (0, 0, 0, 0, 1, 0, 0, 0, 0, 1, 0, 0, 0, 0, 0, 0, 0, 0, 0, 0, 0, 1, 0, 0, 0, 0, 0, 0, 0, 0, 0) |
| 25 | (0, 0, 1, 0, 0, 1, 0, 0, 0, 0, 0, 0, 0, 0, 0, 0, 0, 0, 0, 0, 0, 0, 0, 0, 0, 0, 0, 1, 0, 0, 0) |
| 26 | (0, 0, 0, 0, 0, 0, 0, 0, 0, 0, 0, 0, 1, 0, 1, 0, 0, 0, 0, 0, 0, 0, 0, 0, 0, 0, 0, 0, 1, 0, 0) |
| 27 | (0, 0, 0, 0, 0, 0, 0, 0, 0, 0, 0, 0, 0, 0, 0, 0, 0, 0, 0, 0, 1, 0, 0, 1, 0, 0, 0, 0, 0, 1, 0) |
| 28 | (0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0) |
| 29 | (0, 1, 0, 0, 0, 0, 1, 0, 0, 0, 0, 0, 0, 0, 0, 0, 0, 0, 0, 0, 0, 0, 0, 0, 0, 0, 0, 1, 0, 0, 0) |
| 30 | (0, 0, 0, 0, 0, 0, 0, 0, 0, 1, 0, 0, 0, 0, 1, 0, 0, 0, 0, 0, 0, 0, 0, 0, 0, 0, 0, 1, 0, 0, 0) |
| 31 | (0, 1, 0, 0, 0, 0, 0, 0, 0, 1, 0, 0, 0, 0, 0, 0, 1, 0, 0, 0, 0, 0, 0, 0, 0, 0, 0, 0, 0, 0, 0) |
| 32 | (0, 0, 0, 0, 0, 1, 0, 1, 0, 0, 0, 0, 0, 0, 0, 0, 0, 0, 0, 0, 0, 0, 0, 0, 0, 0, 0, 0, 1, 0, 0) |
| 33 | (0, 0, 0, 0, 0, 0, 0, 0, 0, 0, 0, 0, 0, 0, 0, 0, 1, 0, 0, 0, 0, 0, 1, 0, 0, 0, 1, 0, 0, 0, 0) |
| 34 | (1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 35 | (0, 0, 1, 0, 0, 0, 0, 0, 0, 0, 0, 0, 0, 0, 0, 1, 0, 0, 0, 0, 0, 1, 0, 0, 0, 0, 0, 0, 0, 0, 0) |
| 36 | (0, 1, 0, 0, 0, 0, 0, 0, 0, 0, 0, 0, 1, 0, 0, 0, 0, 0, 0, 0, 0, 1, 0, 0, 0, 0, 0, 0, 0, 0, 0) |
| 37 | (0, 0, 0, 0, 0, 0, 0, 0, 0, 0, 0, 0, 0, 0, 0, 0, 0, 0, 1, 0, 0, 1, 0, 0, 0, 0, 0, 1, 0, 0, 0) |
| 38 | (0, 0, 0, 0, 1, 0, 1, 0, 0, 0, 0, 0, 0, 0, 0, 0, 0, 0, 0, 0, 0, 0, 0, 0, 0, 0, 0, 0, 1, 0, 0) |
| 39 | (0, 0, 0, 0, 0, 1, 0, 0, 0, 0, 0, 0, 0, 1, 0, 0, 1, 0, 0, 0, 0, 0, 0, 0, 0, 0, 0, 0, 0, 0, 0) |
| 40 | (1, 0, 0, 0, 0, 0, 0, 0, 0, 0, 1, 0, 0, 0, 0, 0, 0, 0, 1, 0, 0, 0, 0, 0, 0, 0, 0, 0, 0, 0, 0) |
| 41 | (1, 0, 0, 0, 0, 0, 1, 0, 0, 0, 0, 0, 0, 0, 0, 0, 0, 0, 0, 0, 0, 0, 0, 0, 0, 0, 1, 0, 0, 0, 0) |
| 42 | (0, 1, 0, 0, 0, 0, 0, 0, 0, 0, 0, 0, 0, 0, 0, 1, 0, 0, 0, 0, 0, 0, 1, 0, 0, 0, 0, 0, 0, 0, 0) |
| 43 | (0, 0, 0, 0, 0, 0, 0, 0, 0, 0, 0, 1, 1, 0, 0, 0, 0, 0, 0, 0, 0, 0, 0, 0, 0, 0, 0, 1, 0, 0, 0) |
| 44 | (0, 0, 0, 1, 0, 0, 0, 0, 0, 0, 0, 0, 0, 0, 0, 1, 0, 0, 0, 0, 1, 0, 0, 0, 0, 0, 0, 0, 0, 0, 0) |
| 45 | (0, 0, 0, 1, 0, 0, 0, 0, 0, 0, 0, 0, 0, 0, 1, 0, 0, 0, 0, 0, 0, 1, 0, 0, 0, 0, 0, 0, 0, 0, 0) |
| 46 | (0, 0, 0, 0, 0, 0, 0, 0, 0, 0, 0, 0, 0, 0, 0, 0, 0, 0, 0, 1, 1, 0, 0, 0, 0, 0, 0, 1, 0, 0, 0) |
| 47 | (0, 0, 0, 0, 0, 0, 0, 0, 1, 0, 0, 0, 0, 0, 0, 1, 0, 0, 0, 0, 0, 0, 0, 0, 0, 0, 0, 1, 0, 0, 0) |
| 48 | (0, 0, 0, 0, 0, 0, 0, 0, 0, 0, 0, 0, 0, 0, 0, 0, 1, 1, 0, 0, 0, 0, 0, 0, 0, 0, 0, 0, 0, 0, 1) |
| 49 | (0, 0, 0, 0, 0, 0, 0, 0, 0, 0, 0, 0, 0, 0, 0, 0, 0, 1, 0, 0, 0, 0, 1, 0, 0, 0, 0, 1, 0, 0, 0) |
| 50 | (0, 0, 0, 0, 0, 0, 0, 0, 0, 0, 0, 1, 0, 1, 0, 0, 0, 0, 0, 0, 0, 0, 0, 0, 0, 0, 1, 0, 0, 0, 0) |
| 51 | (0, 0, 0, 0, 0, 0, 0, 1, 0, 1, 0, 0, 0, 0, 0, 0, 0, 0, 0, 0, 0, 0, 1, 0, 0, 0, 0, 0, 0, 0, 0) |
| 52 | (0, 0, 0, 0, 0, 0, 0, 0, 0, 0, 0, 1, 0, 0, 1, 0, 0, 0, 0, 0, 0, 0, 0, 0, 0, 1, 0, 0, 0, 0, 0) |
| 53 | (0, 1, 0, 0, 0, 0, 0, 0, 1, 0, 0, 0, 0, 0, 0, 0, 0, 1, 0, 0, 0, 0, 0, 0, 0, 0, 0, 0, 0, 0, 0) |
| 54 | (0, 0, 0, 0, 0, 0, 0, 0, 0, 0, 0, 0, 0, 0, 0, 0, 0, 0, 0, 0, 1, 1, 0, 0, 0, 0, 0, 0, 0, 0, 1) |
| 55 | (0, 0, 0, 0, 0, 0, 0, 0, 0, 0, 1, 0, 0, 0, 0, 1, 0, 0, 0, 0, 0, 0, 0, 0, 0, 1, 0, 0, 0, 0, 0) |
| 56 | (0, 0, 0, 0, 0, 0, 0, 0, 0, 0, 0, 0, 1, 0, 0, 1, 0, 0, 0, 0, 0, 0, 0, 0, 0, 0, 0, 0, 0, 1, 0) |
| 57 | (0, 0, 0, 0, 0, 0, 0, 0, 0, 0, 0, 0, 0, 0, 0, 0, 0, 0, 0, 0, 0, 0, 0, 0, 1, 0, 1, 0, 1, 0, 0) |
| 58 | (0, 0, 0, 0, 0, 0, 0, 0, 0, 0, 1, 0, 1, 0, 0, 0, 0, 0, 0, 0, 0, 0, 0, 0, 0, 0, 1, 0, 0, 0, 0) |
| 59 | (0, 0, 1, 0, 1, 0, 0, 0, 0, 0, 0, 0, 0, 0, 0, 0, 0, 0, 0, 0, 0, 0, 0, 0, 0, 0, 1, 0, 0, 0, 0) |
| 60 | (0, 0, 0, 0, 0, 0, 0, 0, 0, 0, 0, 0, 0, 0, 0, 0, 1, 0, 0, 0, 0, 0, 0, 1, 0, 0, 0, 1, 0, 0, 0) |
| 61 | (0, 0, 0, 0, 0, 0, 1, 0, 0, 0, 0, 0, 0, 0, 1, 0, 1, 0, 0, 0, 0, 0, 0, 0, 0, 0, 0, 0, 0, 0, 0) |
| 62 | (0, 0, 0, 0, 1, 0, 0, 0, 0, 0, 0, 0, 1, 0, 0, 0, 1, 0, 0, 0, 0, 0, 0, 0, 0, 0, 0, 0, 0, 0, 0) |
| 63 | (0, 0, 0, 0, 0, 0, 0, 0, 1, 0, 1, 0, 0, 0, 0, 0, 0, 0, 0, 0, 0, 0, 0, 0, 0, 0, 0, 0, 1, 0, 0) |
| 64 | (0, 1, 0, 0, 0, 0, 0, 0, 0, 0, 0, 0, 0, 1, 0, 0, 0, 0, 0, 0, 1, 0, 0, 0, 0, 0, 0, 0, 0, 0, 0) |
| 65 | (0, 0, 1, 0, 0, 0, 0, 0, 0, 1, 0, 0, 0, 0, 0, 0, 0, 0, 0, 1, 0, 0, 0, 0, 0, 0, 0, 0, 0, 0, 0) |
| 66 | (0, 0, 0, 0, 0, 0, 0, 0, 0, 0, 0, 0, 0, 0, 0, 0, 0, 1, 0, 0, 0, 0, 0, 1, 0, 0, 1, 0, 0, 0, 0) |
| 67 | (1, 0, 0, 0, 0, 0, 0, 0, 0, 0, 0, 0, 0, 0, 0, 1, 0, 0, 0, 0, 0, 0, 0, 1, 0, 0, 0,0, 0, 0, 0) |
| 68 | (0, 1, 0, 0, 0, 0, 0, 0, 0, 0, 0, 1, 0, 0, 0, 0, 0, 0, 1, 0, 0, 0, 0, 0, 0, 0, 0, 0, 0, 0, 0) |
| 69 | (0, 0, 0, 0, 1, 0, 0, 0, 0, 0, 0, 0, 0, 1, 0, 0, 0, 1, 0, 0, 0, 0, 0, 0, 0, 0, 0, 0, 0, 0, 0) |
| 70 | (0, 1, 1, 0, 0, 0, 0, 0, 0, 0, 0, 0, 0, 0, 0, 0, 0, 0, 0, 0, 0, 0, 0, 0, 0, 0, 0, 0, 0, 1, 0) |
| 71 | (0, 0, 0, 0, 1, 0, 0, 1, 0, 0, 0, 0, 0, 0, 0, 0, 0, 0, 0, 0, 0, 0, 0, 0, 0, 0, 0, 0, 0, 1, 0) |
| 72 | (0, 0, 0, 0, 0, 0, 0, 0, 1, 0, 0, 0, 0, 1, 0, 0, 0, 0, 0, 0, 0, 0, 0, 0, 0, 1, 0, 0, 0, 0, 0) |
| 73 | (0, 0, 0, 0, 0, 0, 0, 0, 0, 0, 0, 0, 0, 0, 0, 0, 0, 0, 0, 1, 0, 1, 0, 0, 0, 0, 1, 0, 0, 0, 0) |
| 74 | (0, 0, 0, 0, 0, 0, 1, 0, 0, 0, 0, 0, 0, 0, 0, 1, 0, 1, 0, 0, 0, 0, 0, 0, 0, 0, 0, 0, 0, 0, 0) |
| 75 | (0, 0, 0, 1, 0, 0, 0, 0, 0, 0, 1, 0, 0, 0, 0, 0, 0, 1, 0, 0, 0, 0, 0, 0, 0, 0, 0, 0, 0, 0, 0) |
| 76 | (0, 0, 0, 0, 0, 0, 0, 0, 0, 0, 0, 0, 0, 0, 0, 0, 1, 0, 0, 1, 0, 0, 0, 0, 0, 0, 0, 0, 0, 1, 0) |
| 77 | (0, 0, 0, 0, 0, 1, 1, 0, 0, 0, 0, 0, 0, 0, 0, 0, 0, 0, 0, 0, 0, 0, 0, 0, 0, 0, 0, 0, 0, 1, 0) |
| 78 | (0, 0, 0, 0, 0, 1, 0, 0, 0, 0, 0, 0, 0, 0, 0, 1, 0, 0, 1, 0, 0, 0, 0, 0, 0, 0, 0, 0, 0, 0, 0) |
| 79 | (0, 0, 1, 0, 0, 0, 0, 0, 0, 0, 0, 1, 0, 0, 0, 0, 0, 1, 0, 0, 0, 0, 0, 0, 0, 0, 0, 0, 0, 0, 0) |
| 80 | (0, 0, 0, 1, 0, 0, 0, 1, 0, 0, 0, 0, 0, 0, 0, 0, 0, 0, 0, 0, 0, 0, 0, 0, 1, 0, 0, 0, 0, 0, 0) |
| 81 | (0, 0, 0, 0, 0, 0, 1, 0, 0, 1, 0, 0, 0, 0, 0, 0, 0, 0, 0, 0, 0, 0, 0, 1, 0, 0, 0, 0, 0, 0, 0) |
| 82 | (0, 0, 0, 0, 0, 0, 0, 0, 0, 0, 1, 0, 0, 1, 0, 0, 0, 0, 0, 0, 0, 0, 0, 0, 0, 0, 0, 1, 0, 0, 0) |
| 83 | (0, 0, 0, 0, 0, 0, 0, 1, 1, 0, 0, 0, 0, 0, 0, 0, 0, 0, 0, 0, 0, 0, 0, 1, 0, 0, 0, 0, 0, 0, 0) |
| 84 | (0, 0, 0, 0, 0, 0, 0, 1, 0, 0, 0, 0, 0, 0, 0, 1, 1, 0, 0, 0, 0, 0, 0, 0, 0, 0,0, 0, 0, 0, 0) |
| 85 | (0, 0, 0, 0, 0, 0, 0, 0, 0, 0, 0, 1, 0, 0, 0, 1, 0, 0, 0, 0, 0, 0, 0, 0, 1, 0, 0, 0, 0, 0, 0) |
| 86 | (0, 0, 0, 0, 0, 1, 0, 0, 0, 0, 0, 1, 0, 0, 0, 0, 0, 0, 0, 0, 0, 0, 1, 0, 0, 0, 0, 0, 0, 0, 0) |
| 87 | (0, 0, 0, 0, 0, 0, 1, 0, 0, 0, 0, 1, 0, 0, 0, 0, 0, 0, 0, 0, 0, 1, 0, 0, 0, 0, 0, 0, 0, 0, 0) |
| 88 | (0, 0, 0, 0, 0, 1, 0, 0, 1, 0, 0, 0, 0, 0, 0, 0, 0, 0, 0, 0, 0, 1, 0, 0, 0, 0, 0, 0, 0, 0, 0) |
| 89 | (0, 0, 0, 0, 0, 0, 0, 0, 0, 1, 0, 1, 0, 0, 0, 0, 0, 0, 0, 0, 0, 0, 0, 0, 0, 0, 0, 0, 1, 0, 0) |
| 90 | (0, 0, 0, 0, 0, 1, 0, 0, 0, 0, 0, 0, 1, 0, 0, 0, 0, 1, 0, 0, 0, 0, 0, 0, 0, 0, 0, 0, 0, 0, 0) |
| 91 | (0, 0, 1, 0, 0, 0, 0, 0, 0, 0, 0, 0, 1, 0, 0, 0, 0, 0, 0, 0, 0, 0, 1, 0, 0, 0, 0, 0, 0, 0, 0) |
| 92 | (0, 0, 0, 0, 0, 0, 0, 0, 0, 0, 0, 0, 0, 0, 0, 0, 0, 1, 0, 0, 1, 0, 0, 0, 0, 1, 0, 0, 0, 0, 0) |
| 93 | (0, 0, 0, 0, 1, 0, 0, 0, 1, 0, 0, 0, 0, 0, 0, 0, 0, 0, 0, 0, 1, 0, 0, 0, 0, 0, 0, 0, 0, 0, 0) |
| 94 | (0, 1, 0, 0, 0, 1, 0, 0, 0, 0, 0, 0, 0, 0, 0, 0, 0, 0, 0, 0, 0, 0, 0, 0, 1, 0, 0, 0, 0, 0, 0) |
| 95 | (0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1) |
| 96 | (0, 0, 0, 0, 0, 0, 0, 0, 0, 0, 0, 0, 0, 0, 0, 0, 0, 0, 0, 0, 0, 0, 0, 0, 0, 1, 1, 0, 0, 1, 0) |
| 97 | (0, 0, 0, 0, 0, 0, 0, 0, 0, 0, 1, 1, 0, 0, 0, 0, 0, 0, 0, 0, 0, 0, 0, 0, 0, 0, 0, 0, 0, 0, 1) |
| 98 | (0, 0, 0, 0, 0, 0, 0, 0, 0, 0, 0, 0, 0, 0, 0, 0, 0, 0, 0, 0, 0, 0, 1, 1, 0, 0, 0, 0, 0, 0, 1) |
| 99 | (0, 0, 0, 1, 0, 0, 1, 0, 0, 0, 0, 0, 0, 0, 0, 0, 0, 0, 0, 0, 0, 0, 0, 0, 0, 1, 0, 0, 0, 0, 0) |
| 100 | (0, 0, 0, 1, 0, 0, 0, 0, 0, 0, 0, 0, 1, 0, 0, 0, 0, 0, 0, 0, 0, 0, 0, 1, 0, 0, 0, 0, 0, 0, 0) |
| 101 | (1, 0, 0, 0, 0, 0, 0, 0, 1, 0, 0, 0, 0, 0, 0, 0, 1, 0, 0, 0, 0, 0, 0, 0, 0,0, 0, 0, 0, 0, 0) |
| 102 | (0, 0, 0, 0, 0, 0, 0, 1, 0, 0, 0, 0, 1, 0, 0, 0, 0, 0, 0, 1, 0, 0, 0, 0, 0, 0, 0, 0, 0, 0, 0) |
| 103 | (0, 0, 0, 0, 1, 0, 0, 0, 0, 0, 0, 0, 0, 0, 0, 1, 0, 0, 0, 1, 0, 0, 0, 0, 0, 0, 0, 0, 0, 0, 0) |
| 104 | (0, 0, 0, 0, 0, 0, 0, 1, 0, 0, 0, 0, 0, 0, 1, 0, 0, 1, 0, 0, 0, 0, 0, 0, 0, 0, 0, 0, 0, 0, 0) |
| 105 | (0, 0, 0, 0, 1, 0, 0, 0, 0, 0, 1, 0, 0, 0, 0, 0, 0, 0, 0, 0, 0, 0, 1, 0, 0, 0, 0, 0, 0, 0, 0) |
| 106 | (0, 0, 0, 1, 0, 0, 0, 0, 1, 0, 0, 0, 0, 0, 0, 0, 0, 0, 0, 1, 0, 0, 0, 0, 0, 0, 0, 0, 0, 0, 0) |
| 107 | (0, 0, 0, 0, 0, 0, 0, 0, 0, 0, 0, 0, 0, 0, 0, 0, 0, 0, 1, 0, 0, 0, 0, 1, 0, 1, 0, 0, 0, 0, 0) |
| 108 | (0, 0, 0, 0, 0, 0, 1, 1, 0, 0, 0, 0, 0, 0, 0, 0, 0, 0, 0, 0, 0, 0, 0, 0, 0, 0, 0, 0, 0, 0, 1) |
| 109 | (0, 0, 1, 0, 0, 0, 0, 1, 0, 0, 0, 0, 0, 0, 0, 0, 0, 0, 0, 0, 0, 0, 0, 0, 0, 1, 0, 0, 0, 0, 0) |
| 110 | (0, 1, 0, 0, 0, 0, 0, 0, 0, 0, 1, 0, 0, 0, 0, 0, 0, 0, 0, 1, 0, 0, 0, 0, 0, 0, 0, 0, 0, 0, 0) |
| 111 | (0, 0, 0, 0, 0, 0, 0, 0, 0, 0, 0, 0, 0, 0, 0, 0, 1, 0, 1, 0, 0, 0, 0, 0, 0, 0, 0, 0, 1, 0, 0) |
| 112 | (0, 0, 0, 0, 0, 0, 0, 1, 0, 0, 0, 1, 0, 0, 0, 0, 0, 0, 0, 0, 1, 0, 0, 0, 0, 0, 0, 0, 0, 0, 0) |
| 113 | (0, 0, 0, 0, 0, 0, 0, 0, 0, 0, 0, 0, 0, 0, 0, 0, 0, 0, 0, 0, 0, 0, 0, 0, 1, 1, 0, 0, 0, 0, 1) |
| 114 | (0, 0, 0, 1, 0, 0, 0, 0, 0, 1, 0, 0, 0, 0, 0, 0, 0, 0, 1, 0, 0, 0, 0, 0, 0, 0, 0, 0, 0, 0, 0) |
| 115 | (0, 1, 0, 0, 0, 0, 0, 0, 0, 0, 0, 0, 0, 0, 1, 0, 0, 0, 0, 0, 0, 0, 0, 1, 0, 0, 0, 0, 0, 0, 0) |
| 116 | (1, 0, 0, 0, 0, 0, 0, 1, 0, 0, 0, 0, 0, 0, 0, 0, 0, 0, 0, 0, 0, 0, 0, 0, 0, 0, 0, 1, 0, 0, 0) |
| 117 | (0, 0, 0, 0, 0, 0, 0, 0, 0, 0, 0, 0, 0, 0, 0, 0, 0, 0, 1, 0, 1, 0, 0, 0, 0, 0, 1, 0, 0, 0, 0) |
| 118 | (0, 0, 0, 0, 0, 0, 0, 0, 0, 0, 0, 0, 0, 0, 0, 0, 0, 0, 1, 1, 0, 0, 0, 0, 0, 0, 0, 0, 0, 0, 1) |
| 119 | (1, 0, 0, 0, 0, 0, 0, 0, 0, 1, 0, 0, 0, 0, 0, 0, 0, 1, 0, 0, 0, 0, 0, 0, 0, 0, 0, 0, 0, 0, 0) |
| 120 | (0, 0, 0, 0, 0, 0, 0, 1, 0, 0, 1, 0, 0, 0, 0, 0, 0, 0, 0, 0, 0, 1, 0, 0, 0, 0, 0, 0, 0, 0, 0) |
| 121 | (0, 0, 0, 0, 0, 0, 0, 0, 0, 0, 0, 0, 1, 1, 0, 0, 0, 0, 0, 0, 0, 0, 0, 0, 0, 0, 0, 0, 0, 0, 1) |
| 122 | (0, 0, 0, 0, 0, 0, 0, 0, 0, 0, 0, 0, 0, 0, 0, 0, 1, 0, 0, 0, 0, 1, 0, 0, 0, 1, 0, 0, 0, 0, 0) |
| 123 | (0, 0, 0, 0, 0, 0, 0, 0, 0, 0, 0, 0, 0, 0, 0, 0, 0, 0, 1, 0, 0, 0, 1, 0, 1, 0, 0, 0, 0, 0, 0) |
| 124 | (0, 0, 0, 0, 0, 0, 0, 0, 0, 0, 1, 0, 0, 0, 1, 0, 0, 0, 0, 0, 0, 0, 0, 0, 1, 0, 0, 0, 0, 0, 0) |
| 125 | (0, 0, 0, 0, 0, 0, 0, 0, 0, 0, 0, 0, 0, 0, 0, 0, 0, 0, 0, 0, 0, 1, 1, 0, 0, 0, 0, 0, 0, 1, 0) |
| 126 | (0, 0, 0, 0, 1, 0, 0, 0, 0, 0, 0, 0, 0, 0, 1, 0, 0, 0, 1, 0, 0, 0, 0, 0, 0, 0, 0, 0, 0, 0, 0) |
| 127 | (0, 0, 0, 0, 0, 0, 0, 0, 0, 0, 0, 0, 0, 0, 0, 0, 0, 0, 0, 0, 1, 0, 1, 0, 0, 0, 0, 0, 1, 0, 0) |
| 128 | (1, 0, 0, 0, 0, 0, 0, 0, 0, 0, 0, 1, 0, 0, 0, 0, 0, 0, 0, 1, 0, 0, 0, 0, 0, 0, 0, 0, 0, 0, 0) |
| 129 | (1, 0, 0, 0, 0, 0, 0, 0, 0, 0, 0, 0, 0, 1, 0, 0, 0, 0, 0, 0, 0, 1, 0, 0, 0, 0, 0, 0, 0, 0, 0) |
| 130 | (0, 0, 0, 1, 0, 0, 0, 0, 0, 0, 0, 1, 0, 0, 0, 0, 1, 0, 0, 0, 0, 0, 0, 0, 0, 0, 0, 0, 0, 0, 0) |
| 131 | (0, 0, 0, 0, 0, 0, 0, 0, 0, 0, 0, 0, 0, 0, 0, 0, 0, 0, 0, 0, 0, 0, 0, 0, 0, 1, 0, 1, 1, 0, 0) |
| 132 | (0, 0, 0, 0, 0, 0, 0, 0, 0, 0, 0, 0, 0, 0, 0, 0, 0, 0, 0, 0, 0, 0, 0, 0, 1, 0, 0, 1, 0, 1, 0) |
| 133 | (0, 0, 0, 1, 0, 0, 0, 0, 0, 0, 0, 0, 0, 1, 0, 0, 0, 0, 0, 0, 0, 0, 1, 0, 0, 0, 0, 0, 0, 0, 0) |
| 134 | (0, 0, 0, 0, 0, 0, 1, 0, 0, 0, 1, 0, 0, 0, 0, 0, 0, 0, 0, 0, 1, 0, 0, 0, 0, 0, 0, 0, 0, 0, 0) |
| 135 | (0, 0, 0, 0, 1, 1, 0, 0, 0, 0, 0, 0, 0, 0, 0, 0, 0, 0, 0, 0, 0, 0, 0, 0, 0, 0, 0, 0, 0, 0, 1) |
| 136 | (0, 0, 0, 0, 0, 0, 0, 0, 0, 0, 0, 0, 0, 0, 0, 0, 0, 1, 0, 1, 0, 0, 0, 0, 0, 0, 0, 0, 1, 0, 0) |
| 137 | (0, 0, 0, 1, 1, 0, 0, 0, 0, 0, 0, 0, 0, 0, 0, 0, 0, 0, 0, 0, 0, 0, 0, 0, 0, 0, 0, 1, 0, 0, 0) |
| 138 | (0, 0, 1, 0, 0, 0, 0, 0, 0, 0, 0, 0, 0, 0, 1, 0, 0, 0, 0, 0, 1, 0, 0, 0, 0, 0, 0, 0, 0, 0, 0) |
| 139 | (0, 0, 1, 0, 0, 0, 0, 0, 1, 0, 0, 0, 0, 0, 0, 0, 0, 0, 1, 0, 0, 0, 0, 0, 0, 0, 0, 0, 0, 0, 0) |
| 140 | (0, 0, 0, 0, 0, 0, 0, 0, 0, 1, 0, 0, 1, 0, 0, 0, 0, 0, 0, 0, 0, 0, 0, 0, 0, 1, 0, 0, 0, 0, 0) |
| 141 | (0, 0, 0, 0, 0, 0, 0, 0, 0, 1, 1, 0, 0, 0, 0, 0, 0, 0, 0, 0, 0, 0, 0, 0, 0, 0, 0, 0, 0, 1, 0) |
| 142 | (0, 0, 0, 0, 0, 0, 1, 0, 1, 0, 0, 0, 0, 0, 0, 0, 0, 0, 0, 0, 0, 0, 1, 0, 0, 0, 0, 0, 0, 0, 0) |
| 143 | (0, 0, 1, 0, 0, 0, 0, 0, 0, 0, 0, 0, 0, 1, 0, 0, 0, 0, 0, 0, 0, 0, 0, 1, 0, 0, 0, 0, 0, 0, 0) |
| 144 | (0, 0, 0, 0, 0, 0, 0, 0, 1, 0, 0, 0, 1, 0, 0, 0, 0, 0, 0, 0, 0, 0, 0, 0, 1, 0, 0, 0, 0, 0, 0) |
| 145 | (0, 0, 0, 0, 0, 0, 0, 0, 0, 0, 0, 0, 0, 0, 0, 0, 0, 0, 0, 0, 0, 1, 0, 1, 0, 0, 0, 0, 1, 0, 0) |
| 146 | (1, 0, 0, 0, 1, 0, 0, 0, 0, 0, 0, 0, 0, 0, 0, 0, 0, 0, 0, 0, 0, 0, 0, 0, 1, 0, 0, 0, 0, 0, 0) |
| 147 | (0, 0, 1, 0, 0, 0, 1, 0, 0, 0, 0, 0, 0, 0, 0, 0, 0, 0, 0, 0, 0, 0, 0, 0, 1, 0, 0, 0, 0, 0, 0) |
| 148 | (0, 1, 0, 0, 1, 0, 0, 0, 0, 0, 0, 0, 0, 0, 0, 0, 0, 0, 0, 0, 0, 0, 0, 0, 0, 1, 0, 0, 0, 0, 0) |
| 149 | (0, 0, 0, 0, 0, 0, 0, 0, 0, 1, 0, 0, 0, 0, 0, 1, 0, 0, 0, 0, 0, 0, 0, 0, 0, 0, 1, 0, 0, 0, 0) |
| 150 | (0, 0, 0, 0, 0, 0, 0, 0, 0, 0, 0, 0, 0, 1, 0, 1, 0, 0, 0, 0, 0, 0, 0, 0, 0, 0, 0, 0, 1, 0, 0) |
| 151 | (0, 0, 0, 0, 0, 0, 0, 0, 1, 0, 0, 1, 0, 0, 0, 0, 0, 0, 0, 0, 0, 0, 0, 0, 0, 0, 0, 0, 0, 1, 0) |
| 152 | (1, 0, 1, 0, 0, 0, 0, 0, 0, 0, 0, 0, 0, 0, 0, 0, 0, 0, 0, 0, 0, 0, 0, 0, 0, 0, 0, 0, 1, 0, 0) |
| 153 | (0, 0, 0, 0, 0, 0, 0, 0, 0, 0, 0, 0, 0, 0, 0, 0, 0, 1, 1, 0, 0, 0, 0, 0, 0, 0, 0, 0, 0, 1, 0) |
| 154 | (0, 0, 0, 0, 0, 0, 0, 0, 0, 1, 0, 0, 0, 1, 0, 0, 0, 0, 0, 0, 0, 0, 0, 0, 1, 0, 0, 0, 0, 0, 0) |

In the implementation of PG(4, 2) corresponding to Table 2, each codebook includes 31 elements, and the 31 elements respectively correspond to 31 resources. In each codebook, an available resource includes a resource corresponding to an element whose value is 1, and an unavailable resource includes a resource corresponding to an element whose value is 0.

For example, the codebook corresponding to the codebook index 0 in Table 2 is "(0, 0, 0, 0, 0, 0, 0, 0, 0, 0, 0, 0, 0, 1, 1, 0, 0, 0, 0, 0, 0, 0, 0, 0, 0, 0, 0, 0, 0, 1, 0)", with values of a 14^{th} element, a 15^{th} element, and a 30^{th} element each being 1, and values of the other elements being 0, indicating that available resources corresponding to the codebook are three resources corresponding to the 14^{th} element, the 15^{th} element, and the 30^{th} element.

For another example, the codebook corresponding to the codebook index 154 in Table 2 is "(0, 0, 0, 0, 0, 0, 0, 0, 0, 1, 0, 0, 0, 1, 0, 0, 0, 0, 0, 0, 0, 0, 0, 0, 1, 0, 0, 0, 0, 0, 0)", with values of a 10^{th} element, a 14^{th} element, and a 25^{th} element each being 1, and values of the other elements being 0, indicating that available resources corresponding to the codebook are three resources corresponding to the 10^{th} element, the 14^{th} element, and the 25^{th} element.

By analogy, the 155 codebooks included in Table 2 may respectively indicate 155 resource combinations.

In addition, in the 155 codebooks included in Table 2, each codebook is determined by using an i (i=1)-dimensional solution in the N (N=4)-dimensional space without a constraint, that is, 155 solutions corresponding to the 155 codebooks may be located on a same plane in space. In this case, there may be three straight lines in a same plane in 155 straight lines corresponding to the 155 solutions, and as a result, a girth of the 155 resource combinations corresponding to the 155 codebooks is 3. For example, in Table 2, the available resources of the codebook 0 are the resources corresponding to the 14^{th} element, the 15^{th} element, and the 30^{th} element, available resources of the codebook 9 are resources corresponding to a 7^{th} element, a 14^{th} element, and a 20^{th} element, and available resources of codebook 14 are resources corresponding to a 6^{th} element, a 15^{th} element, and a 20^{th} element. That is, a collision exists, in pairs, between the three resource combinations corresponding to the three codebooks. In this case, a minimum girth of resources allocated in the manner shown in Table 2 is 3.

It can be learned from the foregoing definition of the girth that a longer girth reduces collisions between different resources. Therefore, a codebook corresponding to a solution that satisfies the non-linear equation may be determined in Table 2 by using a constraint of the non-linear equation, so that the girth is greater than 3, to reduce joint collisions between different resources. The following provides descriptions using more examples.

It can be learned from the foregoing Table 1 and Example 1 in the implementation example A that points that satisfy the non-linear equation ${x}_{0}^{2} + {x}_{1} {x}_{2} + {x}_{3} {x}_{4} = 0$ are the 15 coordinates corresponding to the resource indexes 4, 8, 12, 13, 14, 15, 17, 18, 19, 24, 25, 26, 29, and 31 in Table 1, and points that do not satisfy the non-linear equation ${x}_{0}^{2} + {x}_{1} {x}_{2} + {x}_{3} {x}_{4} = 0$ are the 16 coordinates corresponding to the resource indexes 1, 2, 3, 5, 6, 7, 9, 10, 11, 16, 20, 21, 22, 23, 28, and 30 in Table 1. In other words, to enable coordinates corresponding to the K₁ resources determined by the first communication apparatus in step S401 to satisfy the non-linear equation, the codebooks in which values of elements at positions "1, 2, 3, 5, 6, 7, 9, 10, 11, 16, 20, 21, 22, 23, 28, and 30" in Table 2 is 1 need to be excluded. That is, 140 codebooks in Table 2 are excluded. Codebooks in Table 2 in which points that satisfy the non-linear equation ${x}_{0}^{2} + {x}_{1} {x}_{2} + {x}_{3} {x}_{4} = 0$ are located are selected, including 15 codebooks corresponding to the codebook indexes 48, 80, 50, 121, 15, 104, 26, 52, 107, 100, 111, 66, 113, 57, and 130 in Table 2, to obtain a codebook set shown in Table 3. That is, each codebook in the codebook set shown in Table 3 is a resource combination corresponding to the points that satisfy the non-linear equation ${x}_{0}^{2} + {x}_{1} {x}_{2} + {x}_{3} {x}_{4} = 0$.

**Table 3**

| Codebook index | Codebook |
|---|---|
| 0 | (0, 0, 0, 0, 0, 0, 0, 0, 0, 0, 0, 0, 0, 0, 0, 0, 1, 1, 0, 0, 0, 0, 0, 0, 0, 0, 0, 0, 0, 0, 1) |
| 1 | (0, 0, 0, 1, 0, 0, 0, 1, 0, 0, 0, 0, 0, 0, 0, 0, 0, 0, 0, 0, 0, 0, 0, 0, 1, 0, 0, 0, 0, 0, 0) |
| 2 | (0, 0, 0, 0, 0, 0, 0, 0, 0, 0, 0, 1, 0, 1, 0, 0, 0, 0, 0, 0, 0, 0, 0, 0, 0, 0, 1, 0, 0, 0, 0) |
| 3 | (0, 0, 0, 0, 0, 0, 0, 0, 0, 0, 0, 0, 1, 1, 0, 0, 0, 0, 0, 0, 0, 0, 0, 0, 0, 0, 0, 0, 0, 0, 1) |
| 4 | (0, 0, 0, 0, 0, 0, 0, 1, 0, 0, 0, 0, 0, 1, 0, 0, 0, 0, 1, 0, 0, 0, 0, 0, 0, 0, 0, 0, 0, 0, 0) |
| 5 | (0, 0, 0, 0, 0, 0, 0, 1, 0, 0, 0, 0, 0, 0, 1, 0, 0, 1, 0, 0, 0, 0, 0, 0, 0, 0, 0, 0, 0, 0, 0) |
| 6 | (0, 0, 0, 0, 0, 0, 0, 0, 0, 0, 0, 0, 1, 0, 1, 0, 0, 0, 0, 0, 0, 0, 0, 0, 0, 0, 0, 0, 1, 0, 0) |
| 7 | (0, 0, 0, 0, 0, 0, 0, 0, 0, 0, 0, 1, 0, 0, 1, 0, 0, 0, 0, 0, 0, 0, 0, 0, 0, 1, 0, 0, 0, 0, 0) |
| 8 | (0, 0, 0, 0, 0, 0, 0, 0, 0, 0, 0, 0, 0, 0, 0, 0, 0, 0, 1, 0, 0, 0, 0, 1, 0, 1, 0, 0, 0, 0, 0) |
| 9 | (0, 0, 0, 1, 0, 0, 0, 0, 0, 0, 0, 0, 1, 0, 0, 0, 0, 0, 0, 0, 0, 0, 0, 1, 0, 0, 0, 0, 0, 0, 0) |
| 10 | (0, 0, 0, 0, 0, 0, 0, 0, 0, 0, 0, 0, 0, 0, 0, 0, 1, 0, 1, 0, 0, 0, 0, 0, 0, 0, 0, 0, 1, 0, 0) |
| 11 | (0, 0, 0, 0, 0, 0, 0, 0, 0, 0, 0, 0, 0, 0, 0, 0, 0, 1, 0, 0, 0, 0, 0, 1, 0, 0, 1, 0, 0, 0, 0) |
| 12 | (0, 0, 0, 0, 0, 0, 0, 0, 0, 0, 0, 0, 0, 0, 0, 0, 0, 0, 0, 0, 0, 0, 0, 0, 1, 1, 0, 0, 0, 0, 1) |
| 13 | (0, 0, 0, 0, 0, 0, 0, 0, 0, 0, 0, 0, 0, 0, 0, 0, 0, 0, 0, 0, 0, 0, 0, 0, 1, 0, 1, 0, 1, 0, 0) |
| 14 | (0, 0, 0, 1, 0, 0, 0, 0, 0, 0, 0, 1, 0, 0, 0, 0, 1, 0, 0, 0, 0, 0, 0, 0, 0, 0, 0, 0, 0, 0, 0) |

In the plurality of codebooks corresponding to Table 3, each codebook includes 31 elements, and the 31 elements respectively correspond to 31 resources. In each codebook, an available resource includes a resource corresponding to an element whose value is 1, and an unavailable resource includes a resource corresponding to an element whose value is 0.

In Table 3, it can be learned from the codebook corresponding to the codebook index 0 that available resources corresponding to the codebook include resources corresponding to elements whose values are 1, that is, a 17^{th} resource, an 18^{th} resource, and a 31^{st} resource.

In Table 3, it can be learned from the codebook corresponding to the codebook index 5 that available resources corresponding to the codebook include resources corresponding to elements whose values are 1, that is, an 8^{th} resource, a 15^{th} resource, and an 18^{th} resource.

In Table 3, it can be learned from the codebook corresponding to the codebook index 6 that available resources corresponding to the codebook include resources corresponding to elements whose values are 1, that is, a 13^{th} resource, a 15^{th} resource, and a 29^{th} resource.

In Table 3, it can be learned from the codebook corresponding to the codebook index 10 that available resources corresponding to the codebook include resources corresponding to elements whose values are 1, that is, a 17^{th} resource, a 19^{th} resource, and a 29^{th} resource.

It can be seen that, in Table 3, for the foregoing four codebooks, a resource collision exists between the codebook corresponding to the codebook index 0 and the codebooks corresponding to the codebook index 5 and the codebook index 10, and no resource collision exists between the codebook corresponding to the codebook index 0 and the codebook corresponding to the codebook index 6; a resource collision exists between the codebook corresponding to the codebook index 5 and the codebooks corresponding to the codebook index 3 and the codebook index 6, and no resource collision exists between the codebook corresponding to the codebook index 5 and the codebook corresponding to the codebook index 10; a resource collision exists between the codebook corresponding to the codebook index 6 and the codebooks corresponding to the codebook index 5 and the codebook index 10, and no resource collision exists between the codebook corresponding to the codebook index 6 and the codebook corresponding to the codebook index 0; and a resource collision exists between the codebook corresponding to the codebook index 10 and the codebooks corresponding to the codebook index 3 and the codebook index 6, and no resource collision exists between the codebook corresponding to the codebook index 10 and the codebook corresponding to the codebook index 5. In other words, the resources corresponding to the four codebooks may respectively correspond to the available resources of the four UEs shown in FIG. 5b. In addition, the 15 codebooks shown in Table 3 are traversed, and resources corresponding to any three codebooks do not form rings that collide in pairs, that is, three straight lines corresponding to any three codebooks are not located on a same plane. To be specific, there is no codebook whose girth is 3 in the codebooks shown in Table 3. It can be learned that a girth of a resource corresponding to the codebook set shown in Table 3 is 4.

Therefore, in the implementation shown in Table 3, in comparison with the implementation shown in Table 2 without a constraint, because resources corresponding to the codebooks in the codebook set shown in Table 3 all satisfy the non-linear equation, at least four straight lines corresponding to the four codebooks, namely, the codebook indexes 0, 5, 6, and 10, in space in Table 3 are an enclosed space, that is, girths in space of the resources corresponding to the codebook set shown in Table 3 are 4, so that the girth can be increased, to reduce joint collisions of different resources.

In some embodiments, in Table 3 and other examples below, quantities of occupiable resources corresponding to different codebooks included in each table are the same (that is, the quantities of occupiable resources are all K₁).

In some embodiments, in Table 3 and other examples below, a sequence of different codebooks included in each table may be randomly changed, that is, a sequence of indexes of codebooks in different rows may be changed.

In some embodiments, in Table 3 and other examples below, each codebook includes M elements, which may be represented as:
a₁, a₂, ..., and a_{M}.

In addition, in Table 3 and other examples below, whether a resource conflict exists in different codebooks may be determined by comparing values of "a₁, a₂, ..., and a_{M}" in different codebooks. For example, in Table 3, values of elements included in the codebook index 0 is "(0, 0, 0, 0, 0, 0, 0, 0, 0, 0, 0, 0, 0, 1, 1, 0, 0, 0, 0, 0, 0, 0, 0, 0, 0, 0, 0, 0, 0, 1, 0), and value of elements included in the codebook index 1 is "(0, 0, 0, 0, 0, 0, 0, 0, 0, 0, 0, 0, 0, 0, 1, 1, 0, 0, 0, 0, 0, 0, 0, 0, 0, 0, 0, 0, 0, 0, 1)". It can be learned that values of the element a₁₅ in the elements in both the two codebook indexes are 1, that is, a resource conflict exists on a 15^{th} resource; and values of other elements are not both 1, and this indicates that no resource conflict exists on other resources.

It can be learned that, in Table 3 and other examples below, when the quantity of codebooks in the codebook set is the same as the quantity of occupiable resources, maximum quantities of supported communication apparatuses are the same. This can avoid large communication interference generated when different communication apparatuses occupy completely same resources. In this manner, a resource collision can occur on a maximum of one resource between resources occupied by different communication apparatuses, and interference can be reduced as much as possible.

Optionally, for M resources corresponding to a₁, a₂, ..., and a_{M}, there may be a plurality of implementations for actual resource mapping positions of the M resources, and values of subscripts "1, 2, ..., and M" of the M resources do not mean a resource mapping position relationship between different resources. The following uses M resources corresponding to resource indexes in ascending order b₁, b₂, ..., and b_{M} as an example for description.

For example, the M resources corresponding to a₁, a₂, ..., and a_{M} in the codebook and M resources corresponding to resource indexes b₁, b₂, ..., and b_{M} may be sorted in ascending order of subscript indexes, to implement one-to-one correspondence between the two groups of M resources. For example, a resource corresponding to a₁ in the codebook is a resource whose resource index is b₁; a resource corresponding to a₂ in the codebook is a resource whose resource index is b₂; and by analogy, a resource corresponding to a_{M} in the codebook is a resource whose resource index is b_{M}.

For another example, for the M resources corresponding to a₁, a₂, ..., and a_{M} in the codebook and M resources corresponding to resource indexes b₁, b₂, ..., and b_{M}, the former may be sorted in ascending order of subscript indexes, and the latter may be sorted in descending order of subscript indexes, to implement one-to-one correspondence between the two groups of M resources. For example, a resource corresponding to a₁ in the codebook is a resource whose resource index is b_{M}; a resource corresponding to a₂ in the codebook is a resource whose resource index is b_{M-1}; and by analogy, a resource corresponding to a_{M} in the codebook is a resource whose resource index is b₁.

For another example, for the M resources corresponding to a₁, a₂, ..., and a_{M} in the codebook and M resources corresponding to resource indexes b₁, b₂, ..., and b_{M}, subscript indexes of the two groups of M resources may be in a correspondence in any sequence, to implement one-to-one correspondence between the two groups of M resources. In different codebooks included in a same table, correspondences between two groups of M resources in the codebooks are the same.

Optionally, each table in Table 3 to Table 6 may represent a codebook set. In a process of determining a resource based on the following codebook set, a resource may be determined based on some or all codebooks included in the codebook set. For example, in S401, the first communication apparatus may determine the K₁ resources based on some or all codebooks indicated by some or all rows in one of the following tables. In other words, the K₁ resources may be determined in an implementation of deleting zero, one, or more codebooks in a plurality of codebooks included in each of Table 3 to Table 6. In this manner, overheads can be reduced, and this manner is applicable to a scenario in which there is a small quantity of communication apparatuses, that is, lines in the N-dimensional space do not need to be allocated to corresponding communication apparatuses one by one.

Optionally, in Table 3 and other examples below, for the M resources corresponding to a₁, a₂, ..., and a_{M}, in S401, when a resource is determined based on a codebook, the K₁ resources may be determined based on some or all of the M resources. In other words, in Table 3 and the following examples, M elements included in any codebook may be deleted, that is, the K₁ resources are determined by using subsets of codebook sets in Table 3 and the following examples.

For ease of understanding, the following uses an implementation process shown in Table 3 as an example, and one or more elements in the 31 (M=31) elements included in the codebook may be deleted.

For example, by deleting an element corresponding to "a₁", M-1 resources corresponding to a₂, ..., and a_{M} may be obtained, and the codebook of the codebook index 0 in Table 3 may be changed from "(0, 0, 0, 0, 0, 0, 0, 0, 0, 0, 0, 0, 0, 0, 0, 0, 1, 1, 0, 0, 0, 0, 0, 0, 0, 0, 0, 0, 0, 0, 1)" to (0, 0, 0, 0, 0, 0, 0, 0, 0, 0, 0, 0, 0, 0, 0, 1, 1, 0, 0, 0, 0, 0, 0, 0, 0, 0, 0, 0, 0, 1).

For another example, by deleting an element corresponding to "a₂", M-1 resources corresponding to a₁, a₃, and a_{M} may be obtained, and the codebook of the codebook index 0 in Table 3 may be changed from "(0, 0, 0, 0, 0, 0, 0, 0, 0, 0, 0, 0, 0, 0, 0, 0, 1, 1, 0, 0, 0, 0, 0, 0, 0, 0, 0, 0, 0, 0, 1)" to (0, 0, 0, 0, 0, 0, 0, 0, 0, 0, 0, 0, 0, 0, 0, 1, 1, 0, 0, 0, 0, 0, 0, 0, 0, 0, 0, 0, 0, 1).

For another example, in Table 3, because coordinates that do not satisfy the non-linear equation are excluded, values of elements at 16 positions "1, 2, 3, 5, 6, 7, 9, 10, 11, 16, 20, 21, 22, 23, 28, and 30" of each codebook in Table 3 are all 0. Therefore, the 16 positions "a₁, a₂, a₃, a₅, a₆, a₇, a₉, a₁₀, a₁₁, a₁₆, a₂₀, a₂₁, a₂₂, a₂₃, a₂₈, and a₃₀" may be deleted from each codebook in the codebook set shown in Table 3.

It can be learned that, in this manner, flexibility of implementing the solution can be improved, and resources corresponding to the codebooks still satisfy that a resource collision occurs on at most one resource, so that interference can be reduced as much as possible. In addition, when the K₁ resources are indicated by using indication information (for example, the foregoing first information and second information), overheads can also be reduced.

Optionally, in actual practice, a quantity of actually available resources may not be equal to a quantity of coordinate points (that is, a total quantity of resources in each codebook). When the quantity of actually available resources is greater than or less than the quantity of coordinate points (that is, the total quantity of resources in each codebook), a resource may still be determined based on a codebook in Table 3 and a related example.

It can be learned from the foregoing Table 1 and Example 2 in the implementation example A that points that satisfy the non-linear equation ${x}_{0}^{2} + {x}_{1}^{2} + {x}_{1} {x}_{2} + {x}_{3} {x}_{4} = 0$ are the 15 coordinates corresponding to the resource indexes 4, 8, 9, 10, 11, 16, 20, 21, 22, 23, 25, 26, 27, 29, and 31 in Table 1, and points that do not satisfy the non-linear equation ${x}_{0}^{2} + {x}_{1}^{2} + {x}_{1} {x}_{2} + {x}_{3} {x}_{4} = 0$ are the 16 coordinates corresponding to the resource indexes 1, 2, 3, 5, 6, 7, 12, 13, 14, 15, 17, 18, 19, 24, 28, and 30 in Table 1. In other words, to enable coordinates corresponding to the K₁ resources determined by the first communication apparatus in step S401 to satisfy the non-linear equation, the codebooks in which values of elements at positions "1, 2, 3, 5, 6, 7, 12, 13, 14, 15, 17, 18, 19, 24, 28, and 30" in Table 2 is 1 need to be excluded. That is, 140 codebooks in Table 2 are excluded. Codebooks in Table 2 in which points that satisfy the non-linear equation ${x}_{0}^{2} + {x}_{1}^{2} + {x}_{1} {x}_{2} + {x}_{3} {x}_{4} = 0$ are located are selected, including 15 codebooks corresponding to the codebook indexes 51, 80, 120, 6, 73, 106, 63, 149, 54, 28, 55, 127, 113, 57, and 44 in Table 2, to obtain a codebook set shown in Table 4. That is, each codebook in the codebook set shown in Table 4 is a resource combination corresponding to the points that satisfy the non-linear equation ${x}_{0}^{2} + {x}_{1}^{2} + {x}_{1} {x}_{2} + {x}_{3} {x}_{4} = 0$.

**Table 4**

| Codebook index | Codebook |
|---|---|
| 0 | (0, 0, 0, 0, 0, 0, 0, 1, 0, 1, 0, 0, 0, 0, 0, 0, 0, 0, 0, 0, 0, 0, 1, 0, 0, 0, 0, 0, 0, 0, 0) |
| 1 | (0, 0, 0, 1, 0, 0, 0, 1, 0, 0, 0, 0, 0, 0, 0, 0, 0, 0, 0, 0, 0, 0, 0, 0, 1, 0, 0, 0, 0, 0, 0) |
| 2 | (0, 0, 0, 0, 0, 0, 0, 1, 0, 0, 1, 0, 0, 0, 0, 0, 0, 0, 0, 0, 0, 1, 0, 0, 0, 0, 0, 0, 0, 0, 0) |
| 3 | (0, 0, 0, 0, 0, 0, 0, 0, 1, 1, 0, 0, 0, 0, 0, 0, 0, 0, 0, 0, 0, 0, 0, 0, 0, 0, 0, 0, 0, 0, 1) |
| 4 | (0, 0, 0, 0, 0, 0, 0, 0, 0, 0, 0, 0, 0, 0, 0, 0, 0, 0, 0, 1, 0, 1, 0, 0, 0, 0, 1, 0, 0, 0, 0) |
| 5 | (0, 0, 0, 1, 0, 0, 0, 0, 1, 0, 0, 0, 0, 0, 0, 0, 0, 0, 0, 1, 0, 0, 0, 0, 0, 0, 0, 0, 0, 0, 0) |
| 6 | (0, 0, 0, 0, 0, 0, 0, 0, 1, 0, 1, 0, 0, 0, 0, 0, 0, 0, 0, 0, 0, 0, 0, 0, 0, 0, 0, 0, 1, 0, 0) |
| 7 | (0, 0, 0, 0, 0, 0, 0, 0, 0, 1, 0, 0, 0, 0, 0, 1, 0, 0, 0, 0, 0, 0, 0, 0, 0, 0, 1, 0, 0, 0, 0) |
| 8 | (0, 0, 0, 0, 0, 0, 0, 0, 0, 0, 0, 0, 0, 0, 0, 0, 0, 0, 0, 0, 1, 1, 0, 0, 0, 0, 0, 0, 0, 0, 1) |
| 9 | (0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0) |
| 10 | (0, 0, 0, 0, 0, 0, 0, 0, 0, 0, 1, 0, 0, 0, 0, 1, 0, 0, 0, 0, 0, 0, 0, 0, 0, 1, 0, 0, 0, 0, 0) |
| 11 | (0, 0, 0, 0, 0, 0, 0, 0, 0, 0, 0, 0, 0, 0, 0, 0, 0, 0, 0, 0, 1, 0, 1, 0, 0, 0, 0, 0, 1, 0, 0) |
| 12 | (0, 0, 0, 0, 0, 0, 0, 0, 0, 0, 0, 0, 0, 0, 0, 0, 0, 0, 0, 0, 0, 0, 0, 0, 1, 1, 0, 0, 0, 0, 1) |
| 13 | (0, 0, 0, 0, 0, 0, 0, 0, 0, 0, 0, 0, 0, 0, 0, 0, 0, 0, 0, 0, 0, 0, 0, 0, 1, 0, 1, 0, 1, 0, 0) |
| 14 | (0, 0, 0, 1, 0, 0, 0, 0, 0, 0, 0, 0, 0, 0, 0, 1, 0, 0, 0, 0, 1, 0, 0, 0, 0, 0, 0, 0, 0, 0, 0) |

In the plurality of codebooks corresponding to Table 4, each codebook includes 31 elements, and the 31 elements respectively correspond to 31 resources. In each codebook, an available resource includes a resource corresponding to an element whose value is 1, and an unavailable resource includes a resource corresponding to an element whose value is 0.

In Table 4, it can be learned from the codebook corresponding to the codebook index 0 that available resources corresponding to the codebook include resources corresponding to elements whose values are 1, that is, an 8^{th} resource, a 10^{th} resource, and a 23^{rd} resource.

In Table 4, it can be learned from the codebook corresponding to the codebook index 2 that available resources corresponding to the codebook include resources corresponding to elements whose values are 1, that is, an 8^{th} resource, an 11^{th} resource, and a 22^{nd} resource.

In Table 4, it can be learned from the codebook corresponding to the codebook index 4 that available resources corresponding to the codebook include resources corresponding to elements whose values are 1, that is, a 20^{th} resource, a 22^{nd} resource, and a 27^{th} resource.

In Table 4, it can be learned from the codebook corresponding to the codebook index 7 that available resources corresponding to the codebook include resources corresponding to elements whose values are 1, that is, a 10^{th} resource, a 16^{th} resource, and a 27^{th} resource.

Similarly, it can be learned that, in Table 4, for the foregoing four codebooks, the resources corresponding to the four codebooks may respectively correspond to the available resources of the four UEs shown in FIG. 5b. In addition, the 15 codebooks shown in Table 4 are traversed, and resources corresponding to any three codebooks do not form rings that collide in pairs, that is, three straight lines corresponding to any three codebooks are not located on a same plane. To be specific, there is no codebook whose girth is 3 in the codebooks shown in Table 4. It can be learned that a girth of a resource corresponding to the codebook set shown in Table 4 is 4.

Therefore, in the implementation shown in Table 4, in comparison with the implementation shown in Table 2 without a constraint, because resources corresponding to the codebooks in the codebook set shown in Table 4 all satisfy the non-linear equation, at least four straight lines corresponding to the four codebooks, namely, the codebook indexes 0, 2, 4, and 7, in space in Table 4 are an enclosed space, that is, girths in space of the resources corresponding to the codebook set shown in Table 4 are 4, so that the girth can be increased, to reduce joint collisions of different resources.

It can be learned from the foregoing implementation example B that in an implementation example of PG(4, 3) (that is, p=3 and N=4), an implementation example of the codebook set is shown in Table 5.

It should be understood that, in the codebook set shown in Table 5, an example in which each codebook corresponds to a line in an N-dimensional space is used. It can be learned from the foregoing descriptions that, when i=1, a quantity of points on each line (that is, a quantity of available resources in each codebook) is K₁=pⁱ + pⁱ⁻¹ + ··· + p + 1=p+1=4, and a total quantity of PG(4, 3) satisfies that p^{N} + p^{N-1} + ··· + p + 1 = 3⁴ + 3³ + 3² + 3 + 1 =121, that is, the total quantity of points of PG(4, 3) may represent 121 resources. A quantity of i-dimensional spaces (where i=1, that is, the quantity of i-dimensional spaces may also be referred to as a quantity of solutions included in the solution set of the i-dimensional subspace in the N-dimensional coordinate space, a quantity of lines in the N-dimensional space, or a quantity of codebooks in the codebook set) is $\frac{{\prod }_{k = N - i + 1}^{N + 1} \left({p}^{k}-1\right)}{{\prod }_{i = 1}^{i + 1} \left({p}^{l}-1\right)} = 1210$. The 1201 i-dimensional spaces may respectively correspond to 1210 codebooks, and each codebook includes 121 elements.

In addition, it can be learned from the foregoing implementation example B that, in the 1210 codebooks, a quantity of points that are included in 121 elements of each codebook and that satisfy the non-linear equation ${x}_{0}^{2} + {x}_{1}^{2} + {x}_{1} {x}_{2} + {x}_{3} {x}_{4} = 0$ is 40. In other words, except for the 40 elements, the other 81 codebooks whose element values are 1 do not satisfy the non-linear equation, and these codebooks need to be excluded. 40 codebooks corresponding to 40 codebook indexes in the codebook set shown in Table 5 may be obtained.

**Table 5**

| Codebook index | Codebook |
|---|---|
| 0 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 0, 0, 0) |
| 1 | (0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0) |
| 2 | (0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0) |
| 3 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0) |
| 4 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 5 | (0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0) |
| 6 | (0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0) |
| 7 | (0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0) |
| 8 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 9 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 1, 0, 0, 1, 0, 0, 0, 0, 0, 0, 0, 0, 0, 1, 0, 0, 0, 0, 0, 0, 0, 0, 0) |
| 10 | (0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0) |
| 11 | (0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0) |
| 12 | (0, 0, 0, 0, 0, 0, 0, 1, 0, 0, 0, 0, 0, 0, 0, 0, 1, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0) |
| 13 | (0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0) |
| 14 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 15 | (0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0) |
| 16 | (0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 17 | (0, 0, 0, 0, 0, 1, 0, 0, 0, 0, 0, 0, 0, 0, 1, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0) |
| 18 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0) |
| 19 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 1, 0, 0, 0, 0, 0, 0, 1, 0, 0, 0, 1, 0, 0, 0, 0, 0, 0, 0, 0, 0, 0, 0) |
| 20 | (0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0) |
| 21 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 1, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0) |
| 22 | (0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0) |
| 23 | (0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0) |
| 24 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 1) |
| 25 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 1, 0, 0, 0) |
| 26 | (0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 27 | (0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 28 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0) |
| 29 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 0, 1, 0, 0, 0, 0, 0, 0) |
| 30 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 1, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0) |
| 31 | (0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0) |
| 32 | (0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 33 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 1) |
| 34 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 1, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0) |
| 35 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 0, 1, 0, 0, 0) |
| 36 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0) |
| 37 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 1, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0) |
| 38 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 39 | (0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0) |

In the plurality of codebooks corresponding to Table 5, each codebook includes 121 elements, and the 121 elements respectively correspond to 121 resources. In each codebook, an available resource includes a resource corresponding to an element whose value is 1, and an unavailable resource includes a resource corresponding to an element whose value is 0.

In Table 5, it can be learned from the codebook corresponding to the codebook index 1 that available resources corresponding to the codebook include resources corresponding to elements whose values are 1, that is, a 17^{th} resource, a 32^{nd} resource, a 74^{th} resource, and a 106^{th} resource.

In Table 5, it can be learned from the codebook corresponding to the codebook index 2 that available resources corresponding to the codebook include resources corresponding to elements whose values are 1, that is, a 24^{th} resource, a 39^{th} resource, a 63^{rd} resource, and a 106^{th} resource.

In Table 5, it can be learned from the codebook corresponding to the codebook index 3 that available resources corresponding to the codebook include resources corresponding to elements whose values are 1, that is, a 63^{rd} resource, a 69^{th} resource, a 75^{th} resource, and a 115^{th} resource.

In Table 5, it can be learned from the codebook corresponding to the codebook index 8 that available resources corresponding to the codebook include resources corresponding to elements whose values are 1, that is, a 73^{rd} resource, a 74^{th} resource, and a 75^{th} resource.

Similarly, it can be learned that, in Table 5, for the foregoing four codebooks, the resources corresponding to the four codebooks may respectively correspond to the available resources of the four UEs shown in FIG. 5b. In addition, the 40 codebooks shown in Table 5 are traversed, and resources corresponding to any three codebooks do not form rings that collide in pairs, that is, three straight lines corresponding to any three codebooks are not located on a same plane. To be specific, there is no codebook whose girth is 3 in the codebooks shown in Table 5. It can be learned that a girth of a resource corresponding to the codebook set shown in Table 5 is 4.

Therefore, in the implementation shown in Table 5, in comparison with the implementation shown in Table 2 without a constraint, because resources corresponding to the codebooks in the codebook set shown in Table 5 all satisfy the non-linear equation, at least four straight lines corresponding to the four codebooks, namely, the codebook indexes 1, 2, 3, and 8, in space in Table 5 are an enclosed space, that is, girths in space of the resources corresponding to the codebook set shown in Table 5 are 4, so that the girth can be increased, to reduce joint collisions of different resources.

In another implementation example, in an implementation example of PG(4, 3) (that is, p=3 and N=4), in the 1210 codebooks, a quantity of points that are included in 121 elements of each codebook and that satisfy the non-linear equation ${x}_{0}^{2} + {x}_{1} {x}_{2} + {x}_{3} {x}_{4} = 0$ is 40. In other words, except for the 40 elements, the other 81 codebooks whose element values are 1 do not satisfy the non-linear equation, and these codebooks need to be excluded. 40 codebooks may be obtained, and the 40 codebooks are shown in Table 6.

**Table 6**

| Codebook index | Codebook |
|---|---|
| 0 | (0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0) |
| 1 | (0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 2 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0) |
| 3 | (0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0) |
| 4 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 1, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0) |
| 5 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0) |
| 6 | (0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0) |
| 7 | (0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 8 | (0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 9 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 10 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 11 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 12 | (0, 0, 0, 0, 0, 0, 0, 1, 0, 0, 0, 0, 0, 0, 0, 0, 1, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0) |
| 13 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 1, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0) |
| 14 | (0, 0, 0, 0, 0, 1, 0, 0, 0, 0, 0, 0, 0, 0, 1, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0,0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0) |
| 15 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 1, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0) |
| 16 | (0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0) |
| 17 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 1) |
| 18 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 1, 0, 0, 0, 0, 0, 0, 0, 0, 0, 0, 0, 1, 0, 0, 0, 1, 0, 0, 0, 0, 0, 0, 0, 0, 0) |
| 19 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 1, 0, 0, 0, 0, 0, 1, 0, 0, 0, 0, 0, 0, 0, 0, 0, 0, 1, 0, 0, 0, 0, 0, 0) |
| 20 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 1, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0) |
| 21 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 1, 0, 0, 0) |
| 22 | (0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0) |
| 23 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 1, 0, 0, 0, 0, 0, 0, 0, 1, 0, 0, 0, 0, 0, 0, 1, 0, 0, 0, 0, 0, 0, 0, 0, 0, 0) |
| 24 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 1, 0, 0, 0, 0, 0, 0, 0, 0, 0, 1, 0, 1, 0, 0, 0, 0, 0, 0, 0, 0, 0, 0, 0) |
| 25 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 1, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0) |
| 26 | (0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 27 | (0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0) |
| 28 | (0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 29 | (0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0) |
| 30 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 1, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1) |
| 31 | (0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 32 | (0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 33 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 1, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0) |
| 34 | (0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0) |
| 35 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 36 | (0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 37 | (0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |
| 38 | (0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 1, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 1, 0, 0, 0) |
| 39 | (0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 1, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0) |

In the plurality of codebooks corresponding to Table 6, each codebook includes 121 elements, and the 121 elements respectively correspond to 121 resources. In each codebook, an available resource includes a resource corresponding to an element whose value is 1, and an unavailable resource includes a resource corresponding to an element whose value is 0.

In Table 6, it can be learned from the codebook corresponding to the codebook index 1 that available resources corresponding to the codebook include resources corresponding to elements whose values are 1, that is, a 17^{th} resource, a 45^{th} resource, a 70^{th} resource, and an 83^{rd} resource.

In Table 6, it can be learned from the codebook corresponding to the codebook index 2 that available resources corresponding to the codebook include resources corresponding to elements whose values are 1, that is, a 33^{rd} resource, a 45^{th} resource, a 48^{th} resource, and a 112^{th} resource.

In Table 6, it can be learned from the codebook corresponding to the codebook index 5 that available resources corresponding to the codebook include resources corresponding to elements whose values are 1, that is, a 62^{nd} resource, a 65^{th} resource, a 77^{th} resource, and a 112^{th} resource.

In Table 6, it can be learned from the codebook corresponding to the codebook index 28 that available resources corresponding to the codebook include resources corresponding to elements whose values are 1, that is, a 24^{th} resource, a 49^{th} resource, a 77^{th} resource, and an 83^{rd} resource.

Similarly, it can be learned that, in Table 6, for the foregoing four codebooks, the resources corresponding to the four codebooks may respectively correspond to the available resources of the four UEs shown in FIG. 5b. In addition, the 40 codebooks shown in Table 6 are traversed, and resources corresponding to any three codebooks do not form rings that collide in pairs, that is, three straight lines corresponding to any three codebooks are not located on a same plane. To be specific, there is no codebook whose girth is 3 in the codebooks shown in Table 6. It can be learned that a girth of a resource corresponding to the codebook set shown in Table 6 is 4.

Therefore, in the implementation shown in Table 6, in comparison with the implementation shown in Table 2 without a constraint, because resources corresponding to the codebooks in the codebook set shown in Table 6 all satisfy the non-linear equation, at least four straight lines corresponding to the four codebooks, namely, the codebook indexes 1, 2, 5, and 28, in space in Table 6 are an enclosed space, that is, girths in space of the resources corresponding to the codebook set shown in Table 6 are 4, so that the girth can be increased, to reduce joint collisions of different resources.

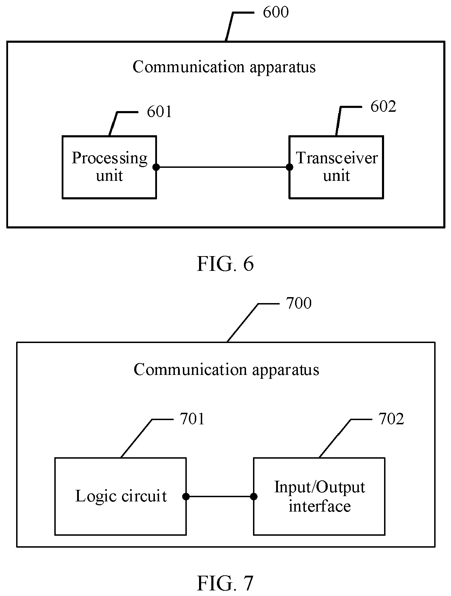

Refer to FIG. 6. An embodiment of this application provides a communication apparatus 600. The communication apparatus 600 can implement a function of the communication apparatus (for example, the first communication apparatus, the second communication apparatus, and the third communication apparatus) in the foregoing method embodiment, and therefore can also implement beneficial effects of the foregoing method embodiment. In this embodiment of this application, the communication apparatus 600 may be a communication apparatus, or may be an integrated circuit, an element, or the like, for example, a chip, in the communication apparatus. In the following embodiment, an example in which the communication apparatus 600 is a communication apparatus is used for description.

In a possible implementation, when the apparatus 600 is configured to perform the foregoing method, the apparatus 600 includes a processing unit 601 and a transceiver unit 602. The processing unit 601 is configured to determine K₁ resources, where the K₁ resources are included in M resources, K₁ is a positive integer, M is an integer greater than or equal to K₁, the M resources respectively correspond to M coordinate points in an N-dimensional coordinate space, the M coordinate points are determined by using a non-linear equation, resource indexes of the K₁ resources in the M resources are determined based on a solution in a solution set of an i₁-dimensional subspace in the N-dimensional coordinate space, N is an integer greater than 1, and i₁ is less than or equal to N. The transceiver unit 602 is configured to send first information, where the first information indicates the K₁ resources.

It should be noted that, for content such as an information execution process of the unit of the communication apparatus 600, refer to the descriptions in the foregoing method embodiment in this application. Details are not described herein.

FIG. 7 is another diagram of a structure of a communication apparatus 700 according to this application. The communication apparatus 700 includes a logic circuit 701 and an input/output interface 702. The communication apparatus 700 may be a chip or an integrated circuit. The transceiver unit 602 shown in FIG. 6 may be a communication interface. The communication interface may be the input/output interface 702 in FIG. 7. The input/output interface 702 may include an input interface and an output interface. Alternatively, the communication interface may be a transceiver circuit, and the transceiver circuit may include an input interface circuit and an output interface circuit.

Optionally, the logic circuit 701 is configured to determine K₁ resources, where the K₁ resources are included in M resources, K₁ is a positive integer, M is an integer greater than or equal to K₁, the M resources respectively correspond to M coordinate points in an N-dimensional coordinate space, the M coordinate points are determined by using a non-linear equation, resource indexes of the K₁ resources in the M resources are determined based on a solution in a solution set of an i₁-dimensional subspace in the N-dimensional coordinate space, N is an integer greater than 1, and i₁ is less than or equal to N. The input/output interface 702 is configured to send first information, where the first information indicates the K₁ resources.

The logic circuit 701 and the input/output interface 702 may further perform other steps performed by the terminal device or the network device in any embodiment, and achieve corresponding beneficial effects. Details are not described herein again.

In a possible implementation, the processing unit 601 shown in FIG. 6 may be the logic circuit 701 in FIG. 7.

Optionally, the logic circuit 701 may be a processing apparatus, and some or all functions of the processing apparatus may be implemented by software. Some or all the functions of the processing apparatus may be implemented by software.

Optionally, the processing apparatus may include a memory and a processor. The memory is configured to store a computer program. The processor reads and executes the computer program stored in the memory, to perform corresponding processing and/or steps in any method embodiment.

Optionally, the processing apparatus may include only a processor. A memory configured to store a computer program is located outside the processing apparatus. The processor is connected to the memory through a circuit/wire, to read and execute the computer program stored in the memory. The memory and the processor may be integrated together, or may be physically independent of each other.

Optionally, the processing apparatus may be one or more chips or one or more processors.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a network processor (network processor, NP), a field programmable gate array (field programmable gate array, FPGA), a programmable controller (programmable logic device, PLD) or another programmable logic device, a transistor logic device, a hardware component, or any combination thereof. The general-purpose processor may be a microprocessor or any conventional processor.

An embodiment of this application further provides a computer-readable storage medium. The storage medium is configured to store one or more computer-executable instructions. When the computer-executable instructions are executed by a processor, the processor performs the method according to the possible implementations of the first communication apparatus (for example, the terminal device or the network device) in the foregoing embodiments.

An embodiment of this application further provides a computer program product (or referred to as a computer program). When a computer program in the computer program product is executed by a processor, the processor performs the method according to the possible implementations of the first communication apparatus (for example, the terminal device or the network device).

An embodiment of this application further provides a chip system. The chip system includes at least one processor, configured to support a communication apparatus in implementing the functions in the foregoing possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first communication apparatus (for example, the terminal device or the network device) in the foregoing method embodiment.

An embodiment of this application further provides a communication system. The communication system includes the first communication apparatus in any one of the foregoing embodiments.

Optionally, the communication system further includes another communication apparatus, for example, a second communication apparatus or a third communication apparatus.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the communication apparatus is a chip used in a terminal, the chip in the terminal implements a function of the terminal in the foregoing method embodiment. That the chip in the terminal receives information from a base station may be understood as that the information is first received by another module (for example, a radio frequency module or an antenna) in the terminal, and then sent to the chip in the terminal by these modules. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the foregoing method embodiment. That the chip in the base station receives information from a terminal may be understood as that the information is first received by another module (for example, a radio frequency module or an antenna) in the base station, and then sent to the chip in the base station by these modules. That the chip in the base station sends information to a terminal may be understood as that the information is first sent to another module (for example, a radio frequency module or an antenna) in the base station, and then sent to the terminal by these modules.

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. The processor and the storage medium may exist in a base station or terminal as discrete devices.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer programs or instructions. When the computer program or the instructions are loaded and executed on a computer, all or some of the procedures or functions in embodiments of this application are executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile storage medium or a non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining K₁ resources, wherein the K₁ resources are comprised in M resources, K₁ is a positive integer, M is an integer greater than or equal to K₁, the M resources respectively correspond to M coordinate points in an N-dimensional coordinate space, the M coordinate points are determined by using a non-linear equation, resource indexes of the K₁ resources in the M resources are determined based on a solution in a solution set of an i₁-dimensional subspace in the N-dimensional coordinate space, N is an integer greater than 1, and i₁ is less than or equal to N; and
sending first information, wherein the first information indicates the K₁ resources.

2. The method according to claim 1, wherein the non-linear equation satisfies at least one of the following:
the non-linear equation is a homogeneous equation;
a degree of at least one polynomial comprised in the non-linear equation is greater than or equal to 2; and
a quantity of unknowns comprised in the non-linear equation is greater than or equal to 4.

3. The method according to claim 1 or 2, wherein a plurality of solutions comprised in the solution set correspond to a plurality of geometries; and
a quantity of geometries, among the plurality of geometries, that form an enclosed space in space is greater than or equal to 4.

4. The method according to any one of claims 1 to 3, wherein the method further comprises:
performing communication based on the K₁ resources.

5. The method according to any one of claims 1 to 4, wherein the method further comprises:
receiving second information, wherein the second information indicates the K₁ resources; and
the determining the K₁ resources comprises: determining the K₁ resources based on the second information.

6. The method according to any one of claims 1 to 5, wherein the N-dimensional coordinate space is an N-dimensional affine space or an N-dimensional projective space.

7. The method according to any one of claims 1 to 6, wherein the N-dimensional coordinate space is an N-dimensional projective space, the N-dimensional projective space is represented as PG(N, p), and p is an order of the N-dimensional projective space.

8. The method according to claim 7, wherein values of N and p are determined based on a value of M.

9. The method according to claim 8, wherein a total quantity of coordinate points in the N-dimensional projective space satisfies: $y = \frac{{p}^{N + 1} - 1}{p - 1} ;$ and $M \leq y ,$ wherein
y is the total quantity of coordinate points in the N-dimensional projective space.

10. The method according to any one of claims 7 to 9, wherein the values of N and p are determined based on third information, and the third information indicates at least one of a lower limit value of a resource quantity of communication resources, an upper limit value of the resource quantity of communication resources, and a quantity of communication apparatuses that perform communication on the M resources.

11. The method according to any one of claims 1 to 10, wherein the solution set of the i₁-dimensional subspace in the N-dimensional coordinate space is a solution set of a system of equations comprising N-i₁ equations.

12. The method according to claim 11, wherein any one of the N-i₁ equations satisfies: $a_ 0 * X_ 0 + a_ 1 * X_ 1 + … + a_N * X_N = 0 ,$ wherein
X_0, X_1, ..., and X_N represent unknowns, and a_0, ..., and a_N are all from a Galois field GF(p).

13. The method according to any one of claims 1 to 12, wherein the method further comprises:
determining K₂ resources, wherein the K₂ resources are comprised in the M resources, K₂ is a positive integer, M is an integer greater than or equal to K₂, resource indexes of the K₂ resources in the M resources are determined based on a solution in a solution set of an i₂-dimensional subspace in the N-dimensional coordinate space, N is an integer greater than 1, and i₂ is less than or equal to N; and
sending fourth information, wherein the fourth information indicates the K₂ resources.

14. The method according to any one of claims 1 to 13, wherein the resource is one or more resource elements REs, one or more resource blocks RBs, or one or more physical resource blocks PRBs.

15. A communication apparatus, comprising a processing unit and a transceiver unit, wherein
the processing unit is configured to determine K₁ resources, wherein the K₁ resources are comprised in M resources, K₁ is a positive integer, M is an integer greater than or equal to K₁, the M resources respectively correspond to M coordinate points in an N-dimensional coordinate space, the M coordinate points are determined by using a non-linear equation, resource indexes of the K₁ resources in the M resources are determined based on a solution in a solution set of an i₁-dimensional subspace in the N-dimensional coordinate space, N is an integer greater than 1, and i₁ is less than or equal to N; and
the transceiver unit is configured to send first information, wherein the first information indicates the K₁ resources.

16. The apparatus according to claim 15, wherein the non-linear equation satisfies at least one of the following:
the non-linear equation is a homogeneous equation;
a degree of at least one polynomial comprised in the non-linear equation is greater than or equal to 2; and
a quantity of unknowns comprised in the non-linear equation is greater than or equal to 4.

17. The apparatus according to claim 15 or 16, wherein a plurality of solutions comprised in the solution set correspond to a plurality of geometries; and
a quantity of geometries, among the plurality of geometries, that form an enclosed space in space is greater than or equal to 4.

18. The apparatus according to any one of claims 15 to 17, wherein the transceiver unit is further configured to perform communication based on the K₁ resources.

19. The apparatus according to any one of claims 15 to 18, wherein the transceiver unit is further configured to receive second information, wherein the second information indicates the K₁ resources; and
that the processing unit determines the K₁ resources comprises: the processing unit determines the K₁ resources based on the second information.

20. The apparatus according to any one of claims 15 to 19, wherein the N-dimensional coordinate space is an N-dimensional affine space or an N-dimensional projective space.

21. The apparatus according to any one of claims 15 to 20, wherein the N-dimensional coordinate space is an N-dimensional projective space, the N-dimensional projective space is represented as PG(N, p), and p is an order of the N-dimensional projective space.

22. The apparatus according to claim 21, wherein values of N and p are determined based on a value of M.

23. The apparatus according to claim 22, wherein a total quantity of coordinate points in the N-dimensional projective space satisfies: $y = \frac{{p}^{N + 1} - 1}{p - 1} ;$ and $M \leq y ,$ wherein
y is the total quantity of coordinate points in the N-dimensional projective space.

24. The apparatus according to any one of claims 21 to 23, wherein the values of N and p are determined based on third information, and the third information indicates at least one of a lower limit value of a resource quantity of communication resources, an upper limit value of the resource quantity of communication resources, and a quantity of communication apparatuses that perform communication on the M resources.

25. The apparatus according to any one of claims 15 to 24, wherein the solution set of the i₁-dimensional subspace in the N-dimensional coordinate space is a solution set of a system of equations comprising N-i₁ equations.

26. The apparatus according to claim 25, wherein any one of the N-i₁ equations satisfies: $a_ 0 * X_ 0 + a_ 1 * X_ 1 + … + a_N * X_N = 0 ,$ wherein
X_0, X_1, ..., and X_N represent unknowns, and a_0, ..., and a_N are all from a Galois field GF(p).

27. The apparatus according to any one of claims 15 to 26, wherein
the processing unit is further configured to determine K₂ resources, wherein the K₂ resources are comprised in the M resources, K₂ is a positive integer, M is an integer greater than or equal to K₂, resource indexes of the K₂ resources in the M resources are determined based on a solution in a solution set of an i₂-dimensional subspace in the N-dimensional coordinate space, N is an integer greater than 1, and i₂ is less than or equal to N; and
the transceiver unit is further configured to send fourth information, wherein the fourth information indicates the K₂ resources.

28. The apparatus according to any one of claims 15 to 27, wherein the resource is one or more resource elements REs, one or more resource blocks RBs, or one or more physical resource blocks PRBs.

29. A communication apparatus, comprising at least one processor, wherein the at least one processor is configured to perform the method according to any one of claims 1 to 14.

30. The communication apparatus according to claim 29, wherein the communication apparatus is a chip or a chip system.

31. A computer-readable storage medium, wherein the medium stores instructions, and when the instructions are executed by a computer, the method according to any one of claims 1 to 14 is implemented.

32. A computer program product, comprising instructions, wherein when the instructions are run on a computer, the method according to any one of claims 1 to 14 is implemented.
